# EUROPÄISCHE PATENTSCHRIFT

(11) **EP 2 706 474 B1**
(45) Veröffentlichungstag und Bekanntmachung des Hinweises auf die Patenterteilung: **10.10.2018**
(21) Anmeldenummer: 13455006.0
(22) Anmeldetag: 28.06.2013
(51) Int. Cl.: G06F 17/30

(54) **Verfahren zur Synchronisation von Daten in einem Computernetzwerk**
Method for synchronising data in a computer network
Procédé de synchronisation de données dans un réseau informatique

(30) Priorität: 02.07.2012 AT 502612012
(43) Veröffentlichungstag der Anmeldung: 12.03.2014
(73) Patentinhaber: Frequentis AG, 1100 Wien (AT)
(72) Erfinder: Klopf, Markus, 3550 Langenlois (AT)
(74) Vertreter: Wildhack & Jellinek

(56) Entgegenhaltungen:
- US-A1- 2003 217 081
- US-A1- 2010 257 230

## Beschreibung

Die Erfindung betrifft ein Verfahren zur Synchronisation von Daten in einem Computernetzwerk gemäß dem Oberbegriff des Patentanspruches 1.

Weiters betrifft die Erfindung ein Computernetzwerk, gemäß dem Oberbegriff des Patentanspruches 13. Das Stand der Technik Dokument US 2010/0257230 A1 offenbart ein Datensynchronisationsverfahren in einem Computernetzwerk. Aus dem Stand der Technik sind eine Vielzahl unterschiedlicher Datensynchronisationsverfahren für Computernetzwerke bzw. diesbezügliche Computernetzwerke bekannt. Solche Computernetzwerke umfassen typischerweise einen oder mehrere Server, so wie eine Anzahl von mit diesem Server in Verbindung stehenden Clients. Sämtliche der mit dem Server in Verbindung stehenden Clients ermöglichen den jeweiligen Benützer den Schreibe- oder Lesezugriff auf die im Server gespeicherten Daten. Gleichzeitig soll im Zuge der Synchronisation sichergestellt werden, dass sämtliche zur synchronisierenden Daten sämtlichen Clients zur Verfügung stehen. Hierbei ist grundsätzlich sicher zu stellen, dass einzelne Eingaben von Clients, die das Gesamtsystem nicht beeinträchtigen, insbesondere den Server nicht zum Absturz bringen und somit die Datenintegrität des gesamten Computernetzwerks gefährden.

Demgemäß ist es Aufgabe der Erfindung, ein Verfahren zur Synchronisation von Daten in einem Computernetzwerk sowie ein Computernetzwerk zur Bereitstellung und Verwaltung synchronisierter Daten zur Verfügung zu stellen, das dem Benutzer einerseits einen hohen Grad an Interaktion ermöglicht und andererseits eine hohe Datensicherheit aufweist.

Die Erfindung löst diese Aufgabe bei einem Verfahren der eingangs genannten Art mit den Merkmalen des Patentanspruches 1. Weiters löst die Erfindung die Aufgabe beim Computernetzwerk der eingangs genannten Art mit den Merkmalen des Patentanspruches 13.

Erfindungsgemäß ist vorgesehen, dass
- auf dem Server ein zentrales Datenmodell zur Verfügung gehalten wird, das die zu synchronisierenden Daten enthält und das bei Einlangen einer Manipulationsanfrage eine der Manipulationsanfrage entsprechende Datenmanipulation vornimmt,
- wobei auf jedem der Clients jeweils ein dem zentralen Datenmodell entsprechendes und mit diesem synchronisiertes lokales Datenmodell zur Verfügung gehalten wird,
- wobei auf jedem der Clients jeweils ein Präsentationsprogramm zur Präsentation der zu synchronisierenden Daten und Interaktion mit einem Benutzer abläuft, und wobei auf den Clients jeweils ein Steuerprogramm abläuft, das dem Benutzer die Möglichkeit der Manipulation der zu synchronisierenden Daten bietet,
- wobei bei Durchführung einer Datenmanipulation durch den Benutzer mit dem auf einem Client ablaufenden Steuerprogramm eine diesbezügliche Manipulationsanfrage erstellt und an das lokale Datenmodell weitergeleitet wird und die jeweilige in der Manipulationsanfrage enthaltene Manipulation im jeweiligen lokalen Datenmodell dieses Clients vorgenommen wird,
- wobei die Manipulationsabfrage nach erfolgreicher Ausführung im lokalen Datenmodell des Clients an den Server übermittelt wird und die jeweilige in der Manipulationsanfrage enthaltene Manipulation im zentralen Datenmodell des Servers vorgenommen wird, und
- wobei nach erfolgreicher Durchführung der Manipulation des zentralen Datenmodells des Servers die Manipulationsanfrage an alle Clients übermittelt wird und die lokalen Datenmodelle aller Clients entsprechend der Manipulationsanfrage geändert werden.

Hierdurch wird ein hoher Grad an Interaktion zwischen den einzelnen Benutzern des Computernetzwerks ermöglicht und gleichzeitig eine hohe Datensicherheit sichergestellt.

Um Dateninkonsistenzen zu vermeiden, kann vorgesehen sein, dass die Übermittlung der Manipulationsanfragen an alle Clients in der Reihenfolge ihres Einlangens beim Server vorgenommen wird.

Zum selben Zweck kann vorgesehen sein, dass
den Manipulationsanfragen fortlaufende Indizes nach der Reihenfolge ihres Einlangens zugeordnet werden, wobei auf dem Server einlangende Manipulationsanfragen insbesondere in einem Single-Thread-Programm verarbeitet werden,
wobei für jeden der Clients beim Erhalt einer Manipulationsanfrage vom Server überprüft wird, ob ihm sämtliche ab einem vorgegebenen Zeitpunkt abgegebenen Manipulationsanfragen zugegangen sind, wobei überprüft wird, ob für jeden Index zwischen einem vorgegebenen Startindex und dem Index der letzten erhaltenen Manipulationsanfrage jeweils eine Manipulationsanfrage mit diesem Index vorliegt, und
bei Fehlen einer Manipulationsanfrage mit einem bestimmten Index eine Aufforderung an den Server zur nachträglichen Übermittlung der fehlenden Manipulationsanfrage abgegeben wird, woraufhin die fehlende Manipulationsanfrage vom Server ausschließlich an den anfragenden Client übermittelt wird.

Um die Übermittlung fehlerhafte Manipulationsanfragen an den Server weitestgehend zu verhindern, kann vorgesehen sein, dass vor der Übermittlung einer Manipulationsanfrage vom Client an den Server jeweils eine Überprüfung des lokalen Datenmodells des Clients durchgeführt wird und bei Ablehnung der Manipulationsanfrage durch das zentrale Datenmodell des Servers die Weiterleitung der Manipulationsanfrage an den Server unterbleibt und gegebenenfalls eine diesbezügliche Fehlermeldung im Präsentationsprogramm dargestellt wird.

Um eine Verteilung fehlerhafter Manipulationsanfragen an sämtliche im Computernetzwerk befindliche Clients zu vermeiden, kann vorgesehen sein,
- dass vor der Übermittlung einer Manipulationsanfrage vom Server an alle Clients eine Überprüfung des zentralen Datenmodells des Servers durchgeführt wird und bei Ablehnung der Manipulationsanfrage durch das zentrale Datenmodell des Servers die Weiterleitung der Manipulationsanfrage die Clients unterbleibt,
- dass die Ausführung der Manipulationsanfrage im zentralen Datenmodell zurückgenommen wird, und
- dass eine Fehlermeldung an den die Manipulationsanfrage erstellenden Client übermittelt wird, wobei die Ausführung dieser Manipulationsanfrage im lokalen Datenmodell dieses Clients zurückgenommen wird und gegebenenfalls eine diesbezügliche Fehlermeldung im Präsentationsprogramm dieses Clients dargestellt wird.

Um sicherzustellen, dass lokal durchgeführte Änderungen im lokalen Datenmodell mit den zentral durchgeführten Änderungen im zentralen Datenmodell konsistent sind, ist vorgesehen, dass das lokale Datenmodell eines Clients, insbesondere aller Clients, jeweils zwei gleichartige, dem zentralen Datenmodell des Servers entsprechende lokale Datenmodelle aufweist,
- wobei bei entsprechender Betätigung des Steuerprogramms durch den Benutzer eine Manipulationsanfrage erstellt und an das erste lokale Datenmodell weitergeleitet wird und die jeweilige Manipulation im ersten lokalen Datenmodell des Clients vorgenommen wird,
- nach erfolgreicher Durchführung der Manipulation im ersten lokalen Datenmodell des Clients die Manipulationsanfrage an den Server übermittelt wird,
- der Client nach dem Erhalt von Manipulationsanfragen vom Server die jeweilige Manipulationsanfragen an das zweite lokale Datenmodell weiterleitet, und
- dass das erste und das zweite Datenmodell miteinander verglichen werden und im Falle eines Konflikts das erste Datenmodell mit dem Inhalt des zweiten Datenmodells überschrieben wird,
- wobei gegebenenfalls nicht vom Server behandelte Manipulationsanfragen des ersten Datenmodells verworfen werden und/oder der Konflikt zwischen den Datenmodellen vom Präsentationsprogramm dargestellt und dem Benutzer zur Kenntnis gebracht wird.

Um zu verhindern, dass das gesamte Computersystem nach Absturz des Servers funktionsunfähig wird, kann vorgesehen sein, dass der Server in vorgegebenen Zeitabständen eine Aktivmeldung an die weiteren Server abgibt und wobei bei Unterbleiben einer Aktivmeldung des Servers einer der weiteren Server fortan als Server fungiert.

Es kann zur Vermeidung eines unmittelbar folgenden Absturzes des weiteren Servers aufgrund fehlerhafter Manipulationsanfragen vorgesehen sein, dass beim Server einlangende Manipulationsanfragen zumindest einem dem Server entsprechenden oder identen weiteren Server mit einer vorgegebenen Zeitverzögerung zugeführt werden, wobei diejenigen Nachrichten, die aufgrund der Zeitverzögerung noch nicht beim weiteren, nunmehr aktiven Server eingelangt sind, verworfen werden.

Um sicherzustellen, dass beim Hinzufügen eines weiteren Clients keine Dateninkonsistenzen auftreten, kann vorgesehen sein, dass während des laufenden Betriebs ein weiterer Client hinzugefügt und über das Computernetzwerk mit dem Server verbunden wird, wobei der Server dem neu hinzugefügten Client das gesamte im Server abgespeicherte zentrale Datenmodell übermittelt und der Client dieses als lokales Datenmodell abspeichert, wobei gegebenenfalls der Startindex des Clients auf den Wert des Index der zuletzt vom Servers versandten Manipulationsanfrage gesetzt wird.

Um sämtliche Handlungen aller Benutzer vorteilhaft aufzeichnen zu können, kann vorgesehen sein, dass sämtliche von den Clients und/oder vom Server abgehende Manipulationsanfragen in einem über das Computernetzwerk mit dem Server verbundenen Aufzeichnungsserver abgespeichert werden.

Um externe Daten in das Computernetzwerk einspeisen zu können, kann vorgesehen sein, dass von einer externen Datenquelle Daten, insbesondere Wetterdaten, Flugpläne, Gate-Informationen oder Verkehrsinformationen Flugradardaten, in das Computernetzwerk eingespeist werden und einem weiteren Client zugeführt werden, der über ein Datenmodell sowie ein Steuerprogramm verfügt, wobei auf Basis der einlangenden Daten der externen Datenquelle eine Manipulationsanfrage erstellt und an das lokale Datenmodell weitergeleitet wird,
- wobei die Manipulationsabfrage nach erfolgreicher Ausführung im lokalen Datenmodell des weiteren Clients an den Server übermittelt wird und die jeweilige in der Manipulationsanfrage enthaltene Manipulation im zentralen Datenmodell des Servers vorgenommen wird, und
- wobei nach erfolgreicher Durchführung der Manipulation des zentralen Datenmodells des Servers die Manipulationsanfrage an alle Clients und an alle weiteren Clients übermittelt wird und die lokalen Datenmodelle aller Clients und aller weiteren Clients entsprechend der Manipulationsanfrage geändert werden.
Es ist vorgesehen, dass für Manipulationsanfragen vom Server an einen Client eine asynchrone oder eine Broadcast-Übertragung verwendet wird.

Zur vorteilhaften Auswahl von Übermittlungsarten innerhalb des Computernetzwerks kann vorgesehen sein, dass für die Übermittlung einzelner oder aller der folgenden Arten von Nachrichten eine synchrone Übertragung verwendet wird:
a) Manipulationsanfragen von einem Client an den Server,
b) Manipulationsanfragen vom Server an einen weiteren Server,
c) Übermittlung fehlende Manipulationsanfragen vom Server an einen Client,
d) Übermittlung gesamter Modelle vom Server an einen Client,
e) Aktivmeldungen vom Server an einen weiteren Server,
   und/oder dass für die Übermittlung einzelner oder aller der folgenden Arten von Nachrichten eine asynchrone Übertragung oder eine Broadcast-Übertragung verwendet wird:
f) Aktivmeldungen vom Server an einen Client.

Weiters betrifft die Erfindung ein Computernetzwerk zur Bereitstellung und Verwaltung synchronisierter Daten, insbesondere Flugverkehrsinformationen. Erfindungsgemäß umfasst das Computernetzwerk
zumindest einen Server und
eine Anzahl von mit dem Server in Datenverbindung stehenden Clients,
- wobei der Server ein zentrales Datenmodell aufweist, das die zu synchronisierenden Daten enthält und das bei Einlangen einer Manipulationsanfrage eine der Manipulationsanfrage entsprechende Datenmanipulation vornimmt,
- wobei jeder der Clients jeweils ein dem zentralen Datenmodell entsprechendes und mit diesem synchronisiertes lokales Datenmodell aufweist,
- wobei auf jedem der Clients jeweils ein Präsentationsprogramm zur Präsentation und Interaktion mit einem Benutzer abläuft, und wobei auf den Clients jeweils ein Steuerprogramm abläuft, das dem Benutzer die Möglichkeit der Manipulation der Daten bietet,
- wobei des Steuerprogramms eines jeden Clients bei Betätigung durch den Benutzer eine diesbezügliche Manipulationsanfrage erstellt und an das lokale Datenmodell weiterleitet und das jeweilige lokale Datenmodell die jeweilige in der Manipulationsanfrage enthaltene Manipulation vornimmt,
- wobei der Client die Manipulationsabfrage nach erfolgreicher Ausführung im lokalen Datenmodell an den Server übermittelt und das zentrale Datenmodell die jeweilige in der Manipulationsanfrage enthaltene Manipulation vornimmt, und
- wobei der Server nach erfolgreicher Durchführung der Manipulation des zentralen Datenmodells die Manipulationsanfrage an alle Clients übermittelt und die lokalen Datenmodelle aller Clients die in der Manipulationsanfrage enthaltene Manipulation vornehmen.

Um Dateninkonsistenzen zu vermeiden, kann vorgesehen sein, dass der Server eine Steuereinheit aufweist, die den Manipulationsanfragen in der Reihenfolge ihres Einlangens beim Server fortlaufende Indizes zuweist.

Zum selben Zweck kann vorgesehen sein, dass der jeder der Clients beim Erhalt einer Manipulationsanfrage überprüft, ob ihm sämtliche ab einem vorgegebenen Zeitpunkt abgegebenen Manipulationsanfragen zugegangen sind, insbesondere ob für jeden Index zwischen einem vorgegebenen Startindex und dem Index der letzten erhaltenen Manipulationsanfrage jeweils eine Manipulationsanfrage mit diesem Index vorliegt, und wobei der Client bei Fehlen einer Manipulationsanfrage mit einem bestimmten Index eine Aufforderung an den Server zur nachträglichen Übermittlung der fehlenden Manipulationsanfrage übermittelt, woraufhin der Server die fehlende Manipulationsanfrage ausschließlich an den anfragenden Client übermittelt.

Um die Übermittlung fehlerhafte Manipulationsanfragen an den Server weitestgehend zu verhindern, kann vorgesehen sein, dass der Client vor der Übermittlung einer Manipulationsanfrage an den Server jeweils eine Überprüfung seines lokalen Datenmodells durchführt und bei Vorliegen eines Fehlers im lokalen Datenmodell die Weiterleitung der Manipulationsanfrage an den Server unterbleibt, wobei das Präsentationsprogramm des Clients und gegebenenfalls eine diesbezügliche Fehlermeldung darstellt.

Um eine Verteilung fehlerhafter Manipulationsanfragen an sämtliche im Computernetzwerk befindliche Clients zu vermeiden, kann vorgesehen sein,
- dass der Server vor der Übermittlung einer Manipulationsanfrage vom Server an alle Clients eine Überprüfung des zentralen Datenmodells durchführt und bei Vorliegen eines Fehlers im zentralen Datenmodell die Weiterleitung der Manipulationsanfrage die Clients unterbleibt,
- dass der Server die Ausführung der Manipulationsanfrage im zentralen Datenmodell zurücknimmt, und
- dass der Server eine Fehlermeldung an den die Manipulationsanfrage erstellenden Client übermittelt, wobei der Client die Ausführung dieser Manipulationsanfrage im lokalen Datenmodell zurücknimmt und das Präsentationsprogramm dieses Clients gegebenenfalls eine diesbezügliche Fehlermeldung darstellt.

Um sicherzustellen, dass lokal durchgeführte Änderungen im lokalen Datenmodell mit den zentral durchgeführten Änderungen im zentralen Datenmodell konsistent sind, ist vorgesehen, dass das lokale Datenmodell eines Clients, insbesondere aller Clients, jeweils zwei gleichartige, dem zentralen Datenmodell des Servers entsprechende lokale Datenmodelle aufweist,
- wobei des Steuerprogramm bei entsprechender Betätigung durch den Benutzer eine Manipulationsanfrage erstellt und an das erste lokale Datenmodell weiterleitet und die jeweilige Manipulation im ersten lokalen Datenmodell des Clients vornimmt,
- wobei der Client nach erfolgreicher Durchführung der Manipulation im ersten lokalen Datenmodell die Manipulationsanfrage an den Server übermittelt wird,
- der Client nach dem Erhalt von Manipulationsanfragen vom Server die jeweilige Manipulationsanfrage an das zweite lokale Datenmodell weiterleitet, und das erste und das zweite Datenmodell miteinander vergleicht und im Falle eines Konflikts den Inhalt des ersten Datenmodells mit dem Inhalt des zweiten Datenmodells überschreibt,
- wobei der Client gegebenenfalls nicht vom Server behandelte Manipulationsanfragen des ersten Datenmodells verwirft und/oder das Präsentationsprogramm den Konflikt zwischen den Datenmodellen darstellt und dem Benutzer zur Kenntnis bringt.

Um zu verhindern, dass das gesamte Computersystem nach Absturz des Servers funktionsunfähig wird, kann vorgesehen sein, dass
- einen weiteren Server, dessen Eingang an den Ausgang der Verzögerungseinheit angschlossen ist, wobei der weitere Server ausschließlich zum Erhalt von Nachrichten und Manipulationsanfragen konfiguriert ist,
- wobei der Server in vorgegebenen Zeitabständen entweder eine Manipulationsanfrage oder eine Aktivmeldung an die weiteren Server abgibt,
- wobei der weitere Server bei Unterbleiben einer Aktivmeldung oder Manipulationsanfrage des Servers fortan als Server fungiert.

Hierbei kann zur Vermeidung eines unmittelbar folgenden Absturzes des weiteren Servers aufgrund fehlerhafter Manipulationsanfragen vorgesehen sein, dass
- eine Verzögerungseinheit mit einem Speicher, die an ihrem Eingang einlangende Nachrichten in ihrem Speicher ablegt und nach einer vorgegebenen Zeit aus diesem ausliest und in ihrem Ausgang abgibt, wobei dem Eingang der Verzögerungseinheit die beim Server einlangenden Nachrichten zugeführt sind,
- wobei der weitere Server bei Unterbleiben einer Aktivmeldung oder Manipulationsanfrage des Servers fortan als Server fungiert und den Speicher der Verzögerungseinheit löscht.

Um sämtliche Handlungen aller Benutzer vorteilhaft aufzeichnen zu können, kann vorgesehen sein, dass einen mit dem Server über das Netzwerk in Datenverbindung stehenden Aufzeichnungsserver, der sämtliche von den Clients und/oder vom Server abgehende Manipulationsanfragen abspeichert.

Um externe Daten in das Computernetzwerk einspeisen zu können, kann vorgesehen sein, dass eine externe Datenquelle, insbesondere mit Flugradardaten, wobei ein weiterer Client vorgesehen ist, der über jeweils ein Datenmodell verfügt, das dem Datenmodell der übrigen Clients entspricht, wobei der weitere Client ein Steuerprogramm aufweist, das bei Einlangen von Daten der externen Datenquelle eine Manipulationsanfrage erstellt und an das lokale Datenmodell weiterleitet,
- wobei der weitere Client die Manipulationsabfrage nach erfolgreicher Manipulation seines lokalen Datenmodells an den Server übermittelt und
- der Server die jeweilige in der Manipulationsanfrage enthaltene Manipulation im zentralen Datenmodell des Servers vornimmt, und
- wobei der Server nach erfolgreicher Durchführung der Manipulation seines zentralen Datenmodells die Manipulationsanfrage an alle Clients und an alle weiteren Clients übermittelt, wobei alle Clients und weiteren Clients ihre lokalen Datenmodelle entsprechend der Manipulationsanfrage ändern.

Ein konkretes Ausführungsbeispiel der Erfindung wird anhand der folgenden Zeichnungsfiguren dargestellt.

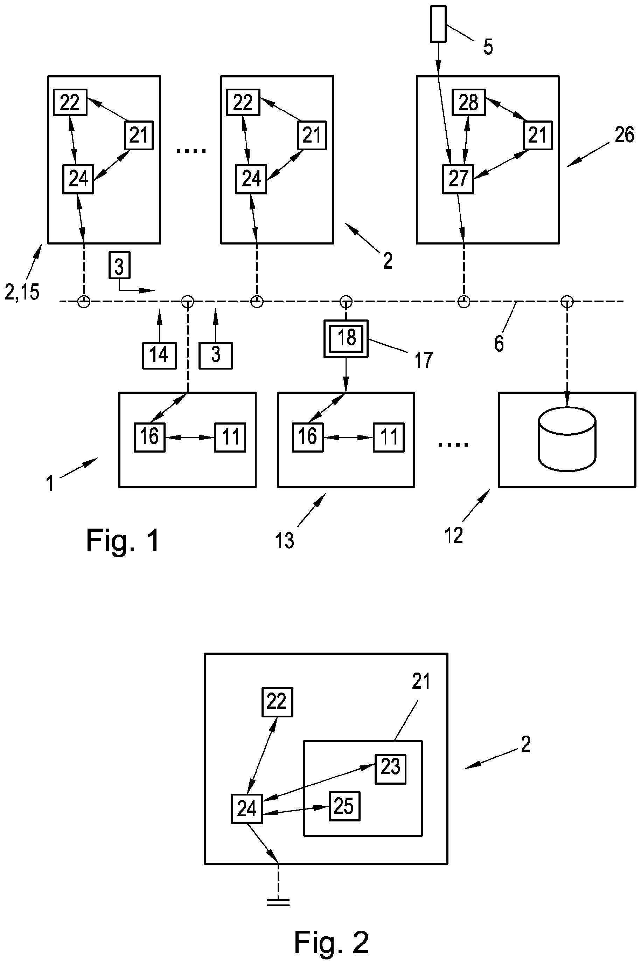

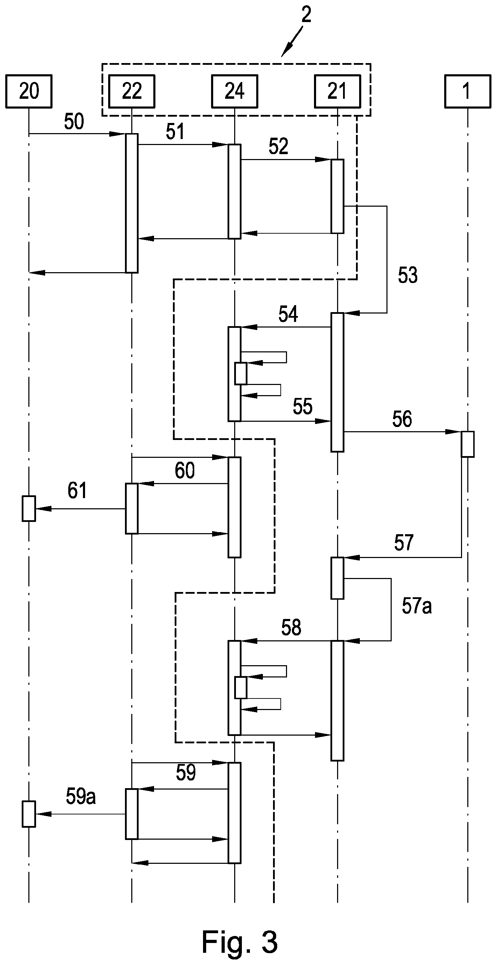

In **Fig. 1** ist exemplarisch ein Computernetzwerk 6 gemäß einer bevorzugten Ausführungsform der Erfindung dargestellt. In **Fig. 2** ist der interne Aufbau eines Clients im Detail dargestellt. **Fig. 3** zeigt schematisch das Vorgehen beim dargestellten Ausführungsbeispiel.

In **Fig. 1** ist ein Computernetzwerk 6 umfassend einen Server 1 sowie eine Anzahl von mit dem Server 1 verbundenen Clients 2 dargestellt. Neben dem Server 1 befinden sich in diesem Computernetzwerk 6 noch weitere optionale Komponenten wie ein weiterer Server 13, sowie ein Aufzeichnungsserver 12. Zudem weist das in **Fig. 1** dargestellte Computernetzwerk einen weiteren optionalen Client auf, über den dem Computernetzwerk 6 und insbesondere dem Server 1 externe Daten aus einer externen Datenquelle 5 zugeführt werden können. Hierbei handelt es sich gegebenenfalls um Wetterdaten, Flugpläne, Gateinformationen, Verkehrsinformationen oder Flugradardaten.

Im folgenden Ausführungsbeispiel sind Daten unterschiedlichster Art zwischen den einzelnen Clients zu synchronisieren, dies sind beispielsweise externe Daten sowie Daten, die jeweils aufgrund einer Bedienungshandlung eines Benutzers 20 von einem Client 2 erstellt wurden. Alle diese Daten sollen für die übrigen Benutzer, die ebenfalls einen Client 2 bedienen synchron verfügbar sein.

In **Fig. 1** wird dargestellt, wie sich eine einzelne von einem Benutzer 20 auf einem der Clients 2 ausgeführte Datenmanipulationshandlung 50 auf das gesamte Computernetzwerk 6 auswirkt. Auf dem Client 2 läuft ein Präsentationsprogramm 22 ab, das die zu synchronisierenden Daten präsentiert und eine Interaktion mit dem Benutzer ermöglicht. Dieses Präsentationsprogramm 22 steht mit einem Steuerprogramm 24 in Datenverbindung, wobei das Steuerprogramm 24 die Netzwerkschnittstelle des Clients 2 ansteuert und eine Datenkommunikation mit dem jeweiligen Server 1 über das Computernetzwerk 6 ermöglicht. Der Benutzer 20 führt mit dem Client 2 bzw. mit dem darauf ablaufenden Präsentationsprogramm 22, beispielsweise durch anklicken, ziehen, Tastatureingabe usw. eine Datenmanipulationshandlung 50 aus. Diese wird vom Präsentationsprogramm 22a an das Steuerprogramm 24 weitergeleitet (Schritt 51), das eine diesbezügliche Manipulationsanfrage 3 erstellt. Diese Manipulationsanfrage 3 wird an ein auf dem Client 2 ablaufendes Datenmodell 21 weitergeleitet (Schritt 52). Das lokale Datenmodell 21, das mit dem zentralen Datenmodell 11 des Servers 1 synchronisiert ist, übernimmt die vom Benutzer 20 bzw. Steuerprogramm 24 erstellte Manipulationsanfrage 3 und führt diese aus (Schritt 53). Hierdurch wird das Datenmodell 21 entsprechend der Manipulationsabfrage 3 verändert (Schritt 54). Die Änderung des lokalen Datenmodells 21 durch die Manipulationsanfrage wird im Regelfall ordnungsgemäß vorgenommen, das lokale Datenmodell 21 akzeptiert die Manipulationsanfrage 3 ohne Abgabe einer Fehlermeldung (Schritt 55). Sofern das lokale Datenmodell 21 eine Fehlermeldung zurückgibt und die Manipulationsanfrage 3 als ungültig oder unzulässig verwirft, ist auch davon auszugehen, dass das mit dem lokalen Datenmodell 21 synchronisierte zentrale Datenmodell 11 im Server 1 die jeweilige Manipulationsanfrage verwerfen oder für ungültig oder unzulässig befinden würde. In diesem Fall wird bereits vom lokalen Datenmodell 21 eine Fehlermeldung generiert und über das Präsentationsprogramm 22 zur Anzeige gebracht. Auch für den Fall, dass die Dateneingabe des Benutzers 20 erfolgreich verarbeitet werden konnte, wird diese Vornahme auf dem Präsentationsprogramm 22 (Schritt 60) angezeigt, allenfalls kann durch unterschiedliche Farbkodierung dargestellt werden, dass die manipulierten Daten bloß vorläufig vorbehaltlich einer endgültigen Bestätigung durch den Server 1 korrekt und akzeptiert sind. Der Benutzer wird hiervon in Kenntnis gesetzt (Schritt 61).

Sofern die Manipulationsanfrage 3 vom lokalen Datenmodell 21 als korrekt angesehen wird, übermittelt das auf dem Client 2 ablaufende Steuerprogramm 24 die Manipulationsanfrage 3 über das Computernetzwerk 26 an den Server 1 (Schritt 56). Der Server 1 bestätigt den Erhalt der Manipulationsanfrage 3 und beginnt seinerseits mit der Verarbeitung der Manipulationsanfrage 3 (Schritt 56a).

Auf dem Server 16 läuft ein serverseitiges Steuerprogramm 16 ab, das die vom Client 2 abgesandte Manipulationsanfrage 3 in Empfang nimmt. Das serverseitige Steuerprogramm 16 übermittelt die Manipulationsanfrage 3 an das im Server 1 befindliche zentrale Datenmodell 11, die in der jeweiligen Manipulationsanfrage 3 enthaltene Manipulation wird im zentralen Datenmodell 11 des Servers 1 vorgenommen. In diesem Fall wird vom zentralen Datenmodell 11 überprüft, ob die Anwendung der in der Manipulationsanfrage 3 enthaltenen Manipulation eine zulässige Änderung des Datenmodells 11 liegt, oder ob die in der Manipulationsanfrage 3 enthaltene Manipulation unzulässig oder undurchführbar ist. Nur für den Fall, dass die in der Manipulationsanfrage 3 enthaltene Manipulation im zentralen Datenmodell 11 erfolgreich vorgenommen werden kann, übermittelt das zentrale Steuerprogramm 16 des Clients 2 eine Manipulationsanfrage 3 an alle Clients 2, um eine Synchronisation mit diesen Clients 2 zu bewerkstelligen (Schritt 57a).

Sofern das zentrale Datenmodell 11 des Servers 1 die beim Server 1 einlangende Manipulationsanfrage 3 nicht verarbeiten kann bzw. wenn die in der Manipulationsanfrage 3 enthaltene Manipulation in Hinblick auf das zentrale Datenmodell 11 des Servers 1 ungültig oder unzulässig ist, unterbleibt die Weiterleitung der Manipulationsanfrage 3 an die Clients 2. Zudem wird eine Fehlermeldung 4 erstellt, die an den die Manipulationsanfrage 3 erstellenden Client 2 zurückübermittelt wird. Die Ausführung der jeweiligen Manipulationsanfrage 3 wird im lokalen Datenmodell 21 des Clients 2 zurückgenommen und eine diesbezügliche Meldung im Präsentationsprogramm 21 des Clients 2 angezeigt.

Den Clients 2 geht die Manipulationsanfrage 3 zu, wobei die jeweiligen lokalen Modelle der Clients 2 die jeweilige Manipulationsanfrage 3 erhalten. Die Manipulationsanfrage 3 wird an das lokale Datenmodell 21 geleitet und die jeweilige in der Manipulationsanfrage 3 enthaltende Manipulation auf das jeweilige lokale Datenmodell 11 des Clients 2 angewendet (Schritt 58). Die lokalen Datenmodelle 21 der Clients 2 werden somit entsprechend der Manipulationsanfrage 3 geändert. Die aktualisierten Daten des lokalen Datenmodells 21 werden mit dem jeweiligen Präsentationsprogramm 22 zur Anzeige gebracht (Schritt 59), der Benutzer 20 wird entsprechend verständigt (Schritt 59a).

Darüber hinaus werden die vom Server 1 erstellten Manipulationsanfragen 3 auch an alle übrigen im Computernetzwerk 6 befindlichen Komponenten, im vorliegenden Fall a den weiteren Client 26, den weiteren Server 13, sowie den Aufzeichnungsserver 12 mittels asynchroner Kommunikation per Broadcast übermittelt.

Im vorliegenden besonderen Ausführungsbeispiel, dargestellt in **Fig. 2****,** weist das lokale Datenmodell 21 eines Clients 2 jeweils zwei gleichartige und dem zentralen Datenmodell 11 des Servers 1 entsprechende lokale Datenmodelle 23, 25 auf. Bei der Erstellung einer Manipulationsanfrage 3 wird diese Manipulationsanfrage 3 an das erste lokale Datenmodell 23 weitergeleitet und die jeweilige in der Manipulationsanfrage 3 enthaltene Manipulation im ersten Datenmodell 33 des Clients 2 vorgenommen. Anschließend wird, bei positiver Rückmeldung des ersten lokalen Datenmodells 23 und erfolgreicher Verarbeitung der jeweiligen Manipulation im ersten lokalen Datenmodell 23 die Manipulationsanfrage 3 an den Server 1 übermittelt. Sofern der Server 1 die Manipulationsanfrage 3 erfolgreich weiterverarbeitet und eine entsprechende Manipulationsanfrage 3 an den Client 2 zurückübermittelt, wird die vom Server 1 erhaltene Manipulationsanfrage 3 an das zweite lokale Datenmodell 25 weitergeleitet und die in der Manipulationsanfrage 3 enthaltene Manipulation auf das zweite lokale Datenmodell 25 angewendet. Anschließend werden das erste und zweite Datenmodell 23, 25 miteinander verglichen. Für den Fall, dass das erste Datenmodell 23 und das zweite Datenmodell 25 miteinander in Konflikt stehen bzw. oder nicht miteinander übereinstimmen, wird das erste Datenmodell 23 mit dem Inhalt des zweiten Datenmodells 25 überschrieben, die ursprünglich vom Client 2 erstellte Manipulationsanfrage 3 wird hierdurch zurückgenommen. Eine diesbezügliche Meldung wird auf dem Client 2 bzw. auf dessen Präsentationsprogramm 22 ausgegeben. Die dem gemäß nicht vom Server 1 behandelte Manipulationsanfrage des ersten Datenmodells 23 wird verworfen.

Sämtlichen von den Clients 2 erstellten und beim Server 1 einlangenden Manipulationsanfragen 3 wird unmittelbar beim Einlangen beim Server 1 jeweils ein fortlaufender Index X zugeordnet, der der Reihenfolge des Einlangens der Manipulationsanfragen 3 entspricht. Die beim Server 1 einlangenden Manipulationsanfragen 3 werden in einem Single-Thread-Programm weiterverarbeitet. Der gesamte Inhalt des lokalen Datenmodells 21 der des ersten und zweiten lokalen Datenmodells 23, 25, sowie des zentralen Datenmodells 11 ist zusammengesetzt durch eine unterschiedliche Anzahl von hintereinander ausgeführten Manipulationsanfragen 3. Bei dem im Server 1 befindlichen Datenmodell 11 liegen jeweils von Clients 2 übermittelte Manipulationsanfragen 3 vor, denen jeweils fortlaufende Indizes X in der Reihenfolge ihres Einlangens zugeordnet sind. Die Zuordnung der fortlaufenden Indizes X erfolgt unmittelbar beim Einlangen der Manipulationsanfragen 3beim Server 1. Erhält der Client 2 eine Manipulationsanfrage 3 vom Server 1, so überprüft der Client 2, ob ihm sämtliche Manipulationsanfragen 3 zugegangen sind, deren jeweiliger fortlaufender Index X kleiner ist, als der nunmehr empfangenen Manipulationsanfrage 3 zugeordneter Index X.

Hierbei empfiehlt es sich hierbei einen Startindex S festzulegen, wobei lediglich überprüft zu werden braucht, ob für jeden Index X zwischen dem vorgegebenen Startindex S und dem Index X der letzten erhaltenen Manipulationsanfrage 3 jeweils eine Manipulationsanfrage 3 mit diesem Index im lokalen Datenmodell 21 vorliegt. Sofern eine Manipulationsanfrage 3 mit einem bestimmten Index X fehlt, übermittelt der Client 2 eine Aufforderung an den Server 1 zur nachträglichen Übermittlung der fehlenden Manipulationsanfrage 3. Der Server 1 übermittelt daraufhin eine diesbezügliche Manipulationsanfrage 3 ausschließlich an den anfragenden Client.

Sofern dem Server 1 mehrere Manipulationsanfragen 3 annähernd gleichzeitig zugehen, so wird durch die Festlegung der Reihenfolge des Einlangens durch die Vergabe fortlaufender Indizes eine eindeutige Reihenfolge festgelegt, wodurch eine Unterscheidung der einzelnen lokalen Datenmodelle 21 voneinander, die durch die unterschiedliche Anwendung der einzelnen Manipulationsanfragen 3 in den einzelnen Clients 2 bewirkt wird, verhindert wird. Sofern zwei oder mehrere Clients 2 annähernd gleichzeitig Manipulationsanfragen 3 an den Server 1 übermitteln, so vergibt der Server 1 für diese jeweils fortlaufende Indizes X, wobei diese danach vergeben werden, welche der Manipulationsanfragen 3 zuerst beim Server 1 einlangt. Die Manipulationsanfragen 3 werden vom Server 1 seriell abgearbeitet. Sofern die Manipulationsanfragen 3 der einzelnen Clients 2 identische Datenbereiche des lokalen Datenmodells 21 betreffen, so liegen vor der Übermittlung der einzelnen Manipulationsanfragen 3 von den Clients 2 an den Server 1 in den einzelnen Clients 2 jeweils unterschiedliche lokale Datenmodelle 21 vor.

Im Falle einer solchen Inkonsistenz gehen die Daten im lokalen Datenmodell 11 des Servers 1 den Daten des lokalen Datenmodells 21 der Clients 2 vor. Empfängt der Client 2 eine Manipulationsanfrage 3 des Servers 1, die inhaltlich von der von ihm an den Server 1 übermittelte Manipulationsanfrage 3 abweicht, so passt der Client 2 sein Datenmodell 21 an das Datenmodell 11 des Servers 1 an. Allenfalls wird eine diesbezügliche Fehlermeldung abgegeben.

Insbesondere können inkonsistente Daten dadurch entstehen, dass zwei Clients Manipulationsanfragen 3 an den Server 1 übermitteln, die auf dem selben Dateninhalt zugreifen. Beispielsweise kann ein erster Client 2 eine Manipulationsanfrage 3 an den Server 1 übermitteln, gemäß der ein bestimmter Dateninhalt gelöscht werden soll. Danach übermittelt ein zweiter Client 2 eine Manipulationsanfrage 3 an den Server 1, die den mittlerweile gelöschten Dateninhalt abändern soll. Eine solche Datenmanipulation ist unzulässig, da der zu verändernde Dateninhalt gelöscht ist. In diesem Fall lehnt das zentrale Datenmodell 11 die Abänderung des Dateninhalts ab und übermittelt an den zweiten Client 2 eine diesbezügliche Fehlermeldung.

Im Folgenden werden die bereits zuvor erwähnten optionalen oder besonderen Komponenten näher dargestellt, die sich neben dem Server 1 und den Clients 2 im vorliegenden Computernetzwerk 6 befinden können. Eine Verwendung der im Folgenden genannten Komponenten ist jedoch keinesfalls zwingend, sondern kann bei entsprechendem Bedarf zusätzlich vorgenommen werden. Jede dieser Komponenten kann für sich genommen alleine, oder in Kombination mit den übrigen Komponenten vorteilhaft verwendet werden.

In **Fig. 1** ist ein weiterer Server 13 dargestellt, der grundsätzliche Funktionalität des Servers 1 aufweist. Der weitere Server 13 ist jedoch grundsätzlich deaktiviert und nimmt im normalen Betriebszustand lediglich die Funktion der Überwachung des Servers 1 wahr. Der Server 1 übermittelt in vorgegebenen Zeitabständen jeweils eine Aktivmeldung 14 an den weiteren Server 13. Der weitere Server 13 überprüft jeweils in zeitlichen Abständen, ob eine Aktivmeldung 14 des Servers 1 vorliegt. Andernfalls geht der weitere Server 13 davon aus, dass der Server 1 nicht verfügbar oder erreichbar ist und übernimmt dessen Funktion. Um eine reibungslose Übernahme dieser Funktion zu gewährleisten, gehen dem weiteren Server 13 die vom Server 1 abgegebenen Manipulationsanfragen 3 unmittelbar zu. Der weitere Server 13 übermittelt die jeweiligen Manipulationsanfragen 3 jedoch nicht selbstständig an sämtliche Clients 2 bzw. sonstige im Computernetzwerk 6 befindliche Einheiten, sondern speichert diese lediglich ab und gibt von sich aus keine Meldungen ab. Lediglich in dem Fall, in dem dem weiteren Server 13 über einen längeren Zeitraum oder Zeitintervall keine Aktivmeldung 14 des Servers 1 zugeht, übernimmt dieser die Funktion des Servers 1 und übermittelt demgemäß die bei ihm einlangenden Manipulationsanfragen 3 an die übrigen Clients 2. In der vorliegenden besonderen Ausführungsform verwirft der weitere Server 13 die letzte eingehende Meldung 3. Zudem kann angenommen werden, dass derjenige Client 2, von dem die letzte Meldung 3 stammt, eine Fehlfunktion aufweist. Dieser Client 2 wird vom weiteren Server 13 getrennt, seine Meldungen 3 werden bis zu einem Rücksetzen ignoriert.

Häufig besteht das Problem, dass das Fehlen einer Rückmeldung des Servers 1, z.B. verursacht durch einen Absturz des Servers 1 oder durch eine Unterbrechung des Computernetzwerks 6 zum Server 1 hin, durch die spezielle Art von bei ihm einlangenden Manipulationsanfragen 3 bewirkt wird. Eine zusätzliche, bevorzugte Sicherheitsmaßnahme, mit der ein Fehlen einer Rückmeldung des weiteren Servers 1 und folglich des gesamten Systems verhindert wird, liegt darin, den weiteren Server 13 die einlangenden Manipulationsanfragen 3 mit einer Zeitverzögerung zuzuführen, wobei diejenigen Manipulationsanfragen 3, die während eines vorgegebenen Zeitintervalls, insbesondere einer bis fünf Sekunden, vor dem Fehlen einer Rückmeldung des Servers 1 erfolgten, nicht zum weiteren Server 13 gelangen. In diesem Fall werden die innerhalb des vorgegebenen Zeitintervalls vor dem Fehlen einer Rückmeldung des Servers 1 abgegebenen Manipulationsanfragen 3 nicht an den weiteren Server 13 weitergeleitet und vernichtet bzw. verworfen. Um dies zu realisieren, ist der weitere Server 13 über eine Verzögerungseinheit 17 zur Aufnahme und verzögerten Abgabe von Manipulationsanfragen 3 und einen darin befindlichen Speicher 18 mit dem Computernetzwerk 6 verbunden. Sobald der weitere Server 13 als Server 1 fungiert, wird die Verzögerungseinheit 17 deaktiviert und der Speicher 18 gelöscht, sodass der weitere Server 13 nunmehr wie der Server 1 unmittelbar auf bei ihm einlangenden Manipulationsanfragen 3 reagieren kann. Umgekehrt kann eine, dem Server 1 vorgeschaltene und bislang deaktivierte Verzögerungseinheit 17 aktiv gestellt werden, wonach der Server 1 die Funktion des weiteren Servers 1 übernimmt.

Wird während des laufenden Betriebs dem Computernetzwerk 6 ein neuer Client 2 hinzugefügt, so besteht grundsätzlich das Problem, dass dieser weitere Client 2 ein lokales Datenmodell aufweist, das von dem zentralen Datenmodell des Servers abweicht. Der Server 1 übermittelt in diesem Fall dem neu hinzugefügten Client 2 das in ihm abgespeicherte zentrale Datenmodell 11. Der Client 2 speichert dieses ihm übermittelte Datenmodell 21 als sein lokales Datenmodell 21; 23, 25 ab. Die Übermittlung des lokalen Datenmodell 21 kann hierbei entweder in Form der Datenstruktur des Datenmodells 21 erfolgen, oder in Form einer Anzahl von hintereinander übermittelten Manipulationsanfragen 3, die ausschließlich an den neu hinzugefügten Client 2 gerichtet sind. Sofern der neu hinzugefügte Client 2, aufgrund eines Absturzes, eine bestimmte Anzahl von Manipulationsanfragen 3 seit einem Zeitpunkt X nicht erhalten hat, besteht ebenfalls die Möglichkeit, dem hinzugefügten Client 2 sämtliche seit diesem Zeitpunkt an die Clients 2 übermittelten Manipulationsanfragen 3 nochmals zu übermitteln.

In Fig. 1 ist weiters ein Aufzeichnungsserver 12 dargestellt. Diesem Aufzeichnungsserver 12 werden sämtliche vom Server 1 und von den Clients 2 abgehenden Manipulationsanfragen 3 über das Computernetzwerk 6 zugeführt. Der Aufzeichnungsserver 12 speichert sämtliche der Manipulationsanfragen 3 zur späteren Verwendung ab.

Dem Computernetzwerk 6 kann auch ein weiterer Client 26 zur Herstellung eines "System2System-Interface" hinzugefügt werden, dem Daten von einer externen Datenquelle 5 zugeführt werden. Solche Daten sind beispielsweise Wetterdaten, Flugpläne, Gateinformationen, Verkehrsinformationen oder Flugradardaten. Diese Daten werden grundsätzlich von externen Datenprovidern oder -lieferanten, wie Wetterdiensten, Fluglinien, Flughäfen usw. bezogen und werden, vorteilhafterweise von den Benutzern 20 für ihre Entscheidungen verwendet. Die Daten der externen Datenquelle 5 werden dem weiteren Client 26 zugeführt. Dieser weitere Client 26 verfügt über ein Datenmodell 21 sowie ein Steuerprogramm 27. Die von der externen Datenquelle 5 einlangenden Daten werden wie Benutzerinteraktionen behandelt, insbesondere wird bei Vorliegen neuer externer Daten von der externen Datenquelle 5 eine Manipulationsanfrage 3 erstellt und diese Manipulationsanfrage 3 an das lokale Datenmodell 21 weitergeleitet. Das lokale Datenmodell 21 entspricht den lokalen Datenmodellen 21 der Clients 2, sowie dem globalen Datenmodell 11 des Servers 1. Nach erfolgreicher Ausführung der in der Manipulationsanfrage 3 gespeicherten Manipulation im lokalen Datenmodell 21 des weiteren Clients 26, wird die Manipulationsanfrage 3 an den Server 1 übermittelt. Sofern die in der Manipulationsanfrage 3 enthaltene Manipulation zulässig ist und dadurch im Datenmodell 11 des Servers 1 vorgenommen werden kann, wird die Manipulationsanfrage 3 vom Server 1 an alle Clients 1 und sofern falls vorhanden an alle weiteren Clients 26 übermittelt. Anschließend werden die lokalen Datenmodelle 21 aller Clients 2 sowie die lokalen Datenmodelle 21 aller weiteren Clients 26 entsprechend der Manipulationsanfrage 3 des Servers 1 abgeändert. Hinsichtlich der Behandlung von Manipulationsanfragen 3 von Clients 2 und weiteren Clients 26, die an externen Datenquellen 5 angeschlossen sind, bestehen seitens des Servers 1 keinerlei Unterschiede. Allenfalls weist der weitere Server 26 sogar ein Präsentationsprogramm 28 auf, das im Falle von unzulässigen externen Daten oder unzulässigen Manipulationsanfragen 3 eine diesbezügliche Fehlermeldung anzeigt. Eine solche Fehlermeldung kann allenfalls auch an den Server 1 sowie an die Clients 2 übermittelt werden.

Im Folgenden wird die Datenübertragung der einzelnen Nachrichten über das Computernetzwerk 6 näher beschrieben:
Es besteht grundsätzlich die Möglichkeit, einzelne Nachrichten über eine Broadcast-Übertragung, das heißt von einem Sender an eine unbestimmte Anzahl von Empfängern zu übertragen. Dies ist insbesondere dann von Vorteil, wenn sämtliche im Computernetzwerk 6 befindliche Einheiten über bestimmte Ereignisse informiert werden sollen. Demgemäß werden im vorliegenden Ausführungsbeispiel Manipulationsanfragen 3 sowie Aktivmeldungen 14 vom Server 1 an alle weiteren Komponenten im Computernetzwerk 6 per Broadcast-Übertragung übermittelt. Hierbei erhält der Server 1 als Sender keine Bestätigung darüber, ob und wie viele der Empfänger diese Nachricht empfangen haben.

Bei einer synchronen Übertragung, die im vorliegenden Ausführungsbeispiel für alle übrigen Arten der Übertragung von Nachrichten zwischen den einzelnen Einheiten des Computernetzwerks 6 verwendet wird, besteht für den jeweiligen Sender die Möglichkeit, sicherzustellen, dass die jeweilige Nachricht vom Adressaten auch tatsächlich erhalten wurden. Im vorliegenden Ausführungsbeispiel wird eine synchrone Übertragung von Nachrichten für Manipulationsanfragen 3 von einem Client 2 an den Server 1, für Manipulationsanfragen 3 vom Server 1 an einen weiteren Server 13, für die Übermittlung fehlender Manipulationsanfragen 3 vom Server 1 an einen Client 2, für die Übermittlung gesamter Modelle vom Server 1 an einen Client 2, sowie Aktivmeldungen 14 vom Server 1 an einen weiteren Server 13 verwendet.

Eine besondere Ausführungsform der Erfindung betrifft den Inselbetrieb, zu dieser Ausführungsform besteht keine Möglichkeit der Kommunikation zwischen dem Client 2 und dem Server 1. Dies kann entweder durch de Ausfall des Servers 1 sowie sämtliche weiterer Server 13 der Fall sein, oder aber es kann die Verbindung zwischen dem Client 2 und dem Server 1 sowie der weiteren Servern 13 unterbrochen sein. Typischerweise antwortet der Server 1 nach Auftreten einer Manipulationsanfrage 3 des Clients innerhalb einer vorgegebenen Zeit (Schritt 56a). Antwortet der Server 1 innerhalb einer vorgegebenen Zeit hingegen nicht auf die Manipulationsanfrage 3, so geht der Client in einen autonomen Betrieb, der für eine bestimmte Zeit, insbesondere etwa 15 Minuten andauert. Während dieser Zeit werden die einzelnen Manipulationsanfragen 3, die vom jeweiligen Client 2 erstellt werden, in einen Zwischenspeicher abgespeichert und für eine allfällige nachträgliche Übermittlung an den Server 1 zur Verfügung gehalten. In der Zwischenzeit werden die in den Manipulationsanfragen 3 enthaltenen Manipulationen auf das lokale Datenmodell 21 des Clients 2 angewendet. Kann innerhalb des vorstehend genannten Zeitraums von etwa 15 Minuten eine Verbindung mit dem Server 1 hergestellt werden, so werden die im Zwischenspeicher abgelegten Manipulationsanfragen 3 an den Server 1 übermittelt und es wird überprüft, ob die im Zwischenspeicher abgelegten Manipulationsanfragen 3 tatsächlich vom Server 1 bearbeitet und wieder an den Client 2 zurückübermittelt werden. Ist dies der Fall, so geht der Client 2 wieder in den Normalbetrieb über.

Ist es hingegen innerhalb der Zeitspanne nicht möglich, erneut eine Verbindung zwischen dem Client 2 und dem Server 1 aufzubauen, so geht der Client 1 in einen autonomen Weiterbetrieb über, bei dem wiederum sämtliche vom Client 2 erstellten Manipulationsanfragen unmittelbar auf dessen lokales Datenmodell 21 angewendet werden, ohne, dass eine Bestätigung des Servers 1 abgewartet wird. Auch wenn nachträglich eine Verbindung zwischen dem Client 2 und dem Server 1 möglich ist, unterbleibt eine Synchronisation zwischen Server 1 und Client 2 durch Weiterleitung aller im Zwischenspeicher abgelegter Manipulationsanfragen, da es sehr wahrscheinlich ist, dass das lokale Datenmodell 21 des Clients 2 bereits derart stark vom zentralen Datenmodell 11 des Servers 1 abweicht, dass eine Synchronisation nicht mehr möglich ist.

## Patentansprüche

1. Verfahren zur Synchronisation von Daten in einem Computernetzwerk (6), insbesondere zur Synchronisation von Verkehrsinformationen, vorzugsweise Luftverkehrsinformationen, in einem Computernetzwerk (6) von Leitständen zur Verkehrsüberwachung, mit zumindest einem Server (1) und einer Anzahl von mit dem Server (1) in Datenverbindung stehenden Clients (2),
- wobei auf dem Server (1) ein zentrales Datenmodell (11) zur Verfügung gehalten wird, das die zu synchronisierenden Daten enthält und das bei Einlangen einer Manipulationsanfrage (3) eine der Manipulationsanfrage (3) entsprechende Datenmanipulation vornimmt,
- wobei auf jedem der Clients (2) jeweils ein dem zentralen Datenmodell (11) entsprechendes und mit diesem synchronisiertes lokales Datenmodell (21) zur Verfügung gehalten wird,
- wobei auf jedem der Clients (2) jeweils ein Präsentationsprogramm (22) zur Präsentation der zu synchronisierenden Daten und Interaktion mit einem Benutzer (20) abläuft, und wobei auf den Clients (2) jeweils ein Steuerprogramm (24) abläuft, das dem Benutzer (20) die Möglichkeit der Manipulation der zu synchronisierenden Daten bietet,
- wobei bei Durchführung einer Datenmanipulation durch den Benutzer (20) mit dem auf einem Client (2) ablaufenden Steuerprogramm (24) eine diesbezügliche Manipulationsanfrage (3) erstellt und an das lokale Datenmodell (21) weitergeleitet wird und die jeweilige in der Manipulationsanfrage (3) enthaltene Manipulation im jeweiligen lokalen Datenmodell (21) dieses Clients (2) vorgenommen wird,
- wobei die Manipulationsabfrage (3) nach erfolgreicher Ausführung im lokalen Datenmodell (21) des Clients (2) an den Server (1) übermittelt wird und die jeweilige in der Manipulationsanfrage (3) enthaltene Manipulation im zentralen Datenmodell (11) des Servers (1) vorgenommen wird, und
- wobei nach erfolgreicher Durchführung der Manipulation des zentralen Datenmodells (11) des Servers (1) die Manipulationsanfrage (3) an alle Clients (2) übermittelt wird und die lokalen Datenmodelle (21) aller Clients (2) entsprechend der Manipulationsanfrage (3) geändert werden, **dadurch gekennzeichnet,**
- **dass** das lokale Datenmodell (21) eines Clients (2), insbesondere aller Clients (2), jeweils zwei gleichartige, dem zentralen Datenmodell (11) des Servers (1) entsprechende lokale Datenmodelle (23, 25) aufweist,
- **dass** bei entsprechender Betätigung des Steuerprogramms (24) durch den Benutzer eine Manipulationsanfrage (3) erstellt und an das erste lokale Datenmodell (23) weitergeleitet wird und die jeweilige Manipulation im ersten lokalen Datenmodell (23) des Clients (2) vorgenommen wird,
- **dass** nach erfolgreicher Durchführung der Manipulation im ersten lokalen Datenmodell (23) des Clients (2) die Manipulationsanfrage (3) an den Server (1) übermittelt wird,
- **dass** der Client (2) nach dem Erhalt von Manipulationsanfragen (3) vom Server (1) die jeweilige Manipulationsanfragen (3) an das zweite lokale Datenmodell (23) weiterleitet,
- **dass** das erste und das zweite Datenmodell (23, 25) miteinander verglichen werden und im Falle eines Konflikts das erste Datenmodell (23) mit dem Inhalt des zweiten Datenmodells (25) überschrieben wird, und
- **dass** für die Übermittlung der Manipulationsanfragen (3) vom Server an einen Client (2) eine asynchrone Übertragung oder Broadcast-Übertragung verwendet wird.

2. Verfahren nach Anspruch 1, **dadurch gekennzeichnet, dass** die Übermittlung der Manipulationsanfragen (3) an alle Clients (2) in der Reihenfolge ihres Einlangens beim Server (1) vorgenommen wird.

3. Verfahren nach einem der vorangehenden Ansprüche, **dadurch gekennzeichnet, dass** den Manipulationsanfragen (3) fortlaufende Indizes (X) nach der Reihenfolge ihres Einlangens zugeordnet werden, wobei auf dem Server (1) einlangende Manipulationsanfragen (3) insbesondere in einem Single-Thread-Programm verarbeitet werden,
wobei für jeden der Clients (2) beim Erhalt einer Manipulationsanfrage (3) vom Server (1) überprüft wird, ob ihm sämtliche ab einem vorgegebenen Zeitpunkt abgegebenen Manipulationsanfragen (3) zugegangen sind, wobei überprüft wird, ob für jeden Index (X) zwischen einem vorgegebenen Startindex (S) und dem Index (X) der letzten erhaltenen Manipulationsanfrage (3) jeweils eine Manipulationsanfrage (3) mit diesem Index (X) vorliegt, und
bei Fehlen einer Manipulationsanfrage (3) mit einem bestimmten Index (X) eine Aufforderung an den Server (1) zur nachträglichen Übermittlung der fehlenden Manipulationsanfrage (3) abgegeben wird, woraufhin die fehlende Manipulationsanfrage (3) vom Server (1) ausschließlich an den anfragenden Client (2) übermittelt wird.

4. Verfahren nach einem der vorangehenden Ansprüche, **dadurch gekennzeichnet, dass** vor der Übermittlung einer Manipulationsanfrage (3) vom Client (2) an den Server (1) jeweils eine Überprüfung des lokalen Datenmodells (21) des Clients (2) durchgeführt wird und bei Ablehnung der Manipulationsanfrage (3) durch das lokale Datenmodell (21) des Clients (2) die Weiterleitung der Manipulationsanfrage (3) an den Server (1) unterbleibt und gegebenenfalls eine diesbezügliche Fehlermeldung im Präsentationsprogramm (22) dargestellt wird.

5. Verfahren nach einem der vorangehenden Ansprüche, **dadurch gekennzeichnet,**
- **dass** vor der Übermittlung einer Manipulationsanfrage (3) vom Server (1) an alle Clients (2) eine Überprüfung des zentralen Datenmodells (11) des Servers (1) durchgeführt wird und bei Ablehnung der Manipulationsanfrage (3) durch das zentrale Datenmodell (11) des Servers (1) die Weiterleitung der Manipulationsanfrage (3) die Clients (2) unterbleibt,
- **dass** die Ausführung der Manipulationsanfrage (3) im zentralen Datenmodell (11) zurückgenommen wird, und
- **dass** eine Fehlermeldung (4) an den die Manipulationsanfrage (3) erstellenden Client (2) übermittelt wird, wobei die Ausführung dieser Manipulationsanfrage (3) im lokalen Datenmodell (21) dieses Clients (2) zurückgenommen wird und gegebenenfalls eine diesbezügliche Fehlermeldung im Präsentationsprogramm (22) dieses Clients (2) dargestellt wird.

6. Verfahren nach einem der vorangehenden Ansprüche, **dadurch gekennzeichnet, dass** nicht vom Server (1) behandelte Manipulationsanfragen (3) des ersten Datenmodells (23) verworfen werden und/oder der Konflikt zwischen den Datenmodellen (23, 25) vom Präsentationsprogramm (22) dargestellt und dem Benutzer zur Kenntnis gebracht wird.

7. Verfahren nach einem der vorangehenden Ansprüche, **dadurch gekennzeichnet, dass** der Server (1) in vorgegebenen Zeitabständen eine Aktivmeldung (14) an weitere Server (13) abgibt und wobei bei Unterbleiben einer Aktivmeldung (14) des Servers (1) einer der weiteren Server (13) fortan die Funktion des Servers (1) übernimmt.

8. Verfahren nach Anspruch 7, **dadurch gekennzeichnet, dass** beim Server (1) einlangende Manipulationsanfragen (3) zumindest einem dem Server (1) entsprechenden oder identen weiteren Server (13) mit einer vorgegebenen Zeitverzögerung zugeführt werden, wobei diejenigen Nachrichten, die aufgrund der Zeitverzögerung noch nicht beim weiteren, nunmehr aktiven Server eingelangt sind, verworfen werden.

9. Verfahren nach einem der vorangehenden Ansprüche, **dadurch gekennzeichnet, dass** während des laufenden Betriebs ein weiterer Client (2) hinzugefügt und über das Computernetzwerk (6) mit dem Server (1) verbunden wird, wobei der Server (1) dem neu hinzugefügten Client (2) das gesamte im Server (1) abgespeicherte zentrale Datenmodell (11) übermittelt und der Client (2) dieses als lokales Datenmodell (21) abspeichert, wobei gegebenenfalls der Startindex (S) des Clients (2) auf den Wert des Index der zuletzt vom Servers (1) versandten Manipulationsanfrage (3) gesetzt wird.

10. Verfahren nach einem der vorangehenden Ansprüche, **dadurch gekennzeichnet, dass** sämtliche von den Clients (2) und/oder vom Server (1) abgehende Manipulationsanfragen (3) in einem über das Computernetzwerk (6) mit dem Server (1) verbundenen Aufzeichnungsserver (12) abgespeichert werden.

11. Verfahren nach einem der vorangehenden Ansprüche, **dadurch gekennzeichnet, dass** von einer externen Datenquelle (5) Daten, insbesondere Wetterdaten, Flugpläne, Gate-Informationen oder Verkehrsinformationen Flugradardaten, in das Computernetzwerk (6) eingespeist werden und einem weiteren Client (26) zugeführt werden, der über ein Datenmodell (21) sowie ein Steuerprogramm (24) verfügt, wobei auf Basis der einlangenden Daten der externen Datenquelle (5) eine Manipulationsanfrage (3) erstellt und an das lokale Datenmodell (21) weitergeleitet wird,
- wobei die Manipulationsabfrage (3) nach erfolgreicher Ausführung im lokalen Datenmodell (21) des weiteren Clients (26) an den Server (1) übermittelt wird und die jeweilige in der Manipulationsanfrage (3) enthaltene Manipulation im zentralen Datenmodell (11) des Servers (1) vorgenommen wird, und
- wobei nach erfolgreicher Durchführung der Manipulation des zentralen Datenmodells (11) des Servers (1) die Manipulationsanfrage (3) an alle Clients (2) und an alle weiteren Clients (26) übermittelt wird und die lokalen Datenmodelle (21) aller Clients (2) und aller weiteren Clients (26) entsprechend der Manipulationsanfrage (3) geändert werden.

12. Verfahren nach einem der vorangehenden Ansprüche, **dadurch gekennzeichnet, dass** für die Übermittlung einzelner oder aller der folgenden Arten von Nachrichten eine synchrone Übertragung verwendet wird:
a) Manipulationsanfragen (3) von einem Client (2) an den Server (1),
b) Manipulationsanfragen (3) vom Server (1) an einen weiteren Server (13),
c) Übermittlung fehlende Manipulationsanfragen (3) vom Server (1) an einen Client (2),
d) Übermittlung gesamter Modelle vom Server (1) an einen Client (2),
e) Aktivmeldungen (14) vom Server (1) an einen weiteren Server (13),
und/oder dass für die Übermittlung einzelner oder aller der folgenden Arten von Nachrichten eine asynchrone Übertragung oder eine Broadcast-Übertragung verwendet wird:
f) Aktivmeldungen (14) vom Server (1) an einen Client (2).

13. Computernetzwerk zur Bereitstellung und Verwaltung synchronisierter Daten, insbesondere Flugverkehrsinformationen, umfassend
zumindest einen Server (1) und
eine Anzahl von mit dem Server (1) in Datenverbindung stehenden Clients (2),
- wobei der Server (1) ein zentrales Datenmodell (11) aufweist, das die zu synchronisierenden Daten enthält und das bei Einlangen einer Manipulationsanfrage (3) eine der Manipulationsanfrage (3) entsprechende Datenmanipulation vornimmt,
- wobei jeder der Clients (2) jeweils ein dem zentralen Datenmodell (11) entsprechendes und mit diesem synchronisiertes lokales Datenmodell (21) aufweist,
- wobei auf jedem der Clients (2) jeweils ein Präsentationsprogramm (22) zur Präsentation und Interaktion mit einem Benutzer abläuft, und wobei auf den Clients (2) jeweils ein Steuerprogramm (24) abläuft, das dem Benutzer die Möglichkeit der Manipulation der Daten bietet,
- wobei des Steuerprogramms (24) eines jeden Clients (2) bei Betätigung durch den Benutzer eine diesbezügliche Manipulationsanfrage (3) erstellt und an das lokale Datenmodell (21) weiterleitet und das jeweilige lokale Datenmodell (21) die jeweilige in der Manipulationsanfrage (3) enthaltene Manipulation vornimmt,
- wobei der Client (2) die Manipulationsabfrage (3) nach erfolgreicher Ausführung im lokalen Datenmodell (21) an den Server (1) übermittelt und das zentrale Datenmodell (11) die jeweilige in der Manipulationsanfrage (3) enthaltene Manipulation vornimmt, und
- wobei der Server (1) nach erfolgreicher Durchführung der Manipulation des zentralen Datenmodells (11) die Manipulationsanfrage (3) an alle Clients (2) übermittelt und die lokalen Datenmodelle (21) aller Clients (2) die in der Manipulationsanfrage (3) enthaltene Manipulation vornehmen, **dadurch gekennzeichnet,**
- **dass** das lokale Datenmodell (21) eines Clients (2), insbesondere aller Clients (2), jeweils zwei gleichartige, dem zentralen Datenmodell (11) des Servers (1) entsprechende lokale Datenmodelle (23, 25) aufweist,
- **dass** das Steuerprogramm (24) bei entsprechender Betätigung durch den Benutzer eine Manipulationsanfrage (3) erstellt und an das erste lokale Datenmodell (23) weiterleitet und die jeweilige Manipulation im ersten lokalen Datenmodell (23) des Clients (2) vornimmt,
- **dass** der Client (2) nach erfolgreicher Durchführung der Manipulation im ersten lokalen Datenmodell (23) die Manipulationsanfrage (3) an den Server (1) übermittelt wird,
- **dass** der Client (2) nach dem Erhalt von Manipulationsanfragen (3) vom Server (1) die jeweilige Manipulationsanfrage (3) an das zweite lokale Datenmodell (23) weiterleitet, und das erste und das zweite Datenmodell (23, 25) miteinander vergleicht und im Falle eines Konflikts den Inhalt des ersten Datenmodells (23) mit dem Inhalt des zweiten Datenmodells (25) überschreibt, und
- **dass** der Server (1) an den Client (2) Manipulationsanfragen (3) mittels asynchroner Übertragung oder Broadcast-Übertragung übermittelt.

14. Computernetzwerk nach Anspruch 13, **dadurch gekennzeichnet, dass** der Server (1) eine Steuereinheit (16) aufweist, die den Manipulationsanfragen (3) in der Reihenfolge ihres Einlangens beim Server (1) fortlaufende Indizes (X) zuweist.

15. Computernetzwerk nach Anspruch 13 oder 14, **dadurch gekennzeichnet, dass** der jeder der Clients (2) beim Erhalt einer Manipulationsanfrage (3) überprüft, ob ihm sämtliche ab einem vorgegebenen Zeitpunkt abgegebenen Manipulationsanfragen (3) zugegangen sind, insbesondere ob für jeden Index (X) zwischen einem vorgegebenen Startindex und dem Index (X) der letzten erhaltenen Manipulationsanfrage (3) jeweils eine Manipulationsanfrage (3) mit diesem Index (X) vorliegt, und wobei der Client (2) bei Fehlen einer Manipulationsanfrage (3) mit einem bestimmten Index (X) eine Aufforderung an den Server (1) zur nachträglichen Übermittlung der fehlenden Manipulationsanfrage (3) übermittelt, woraufhin der Server (1) die fehlende Manipulationsanfrage (3) ausschließlich an den anfragenden Client (2) übermittelt.

16. Computernetzwerk nach einem der Ansprüche 13 bis 15, **dadurch gekennzeichnet, dass** der Client (2) vor der Übermittlung einer Manipulationsanfrage (3) an den Server (1) jeweils eine Überprüfung seines lokalen Datenmodells (21) durchführt und bei Vorliegen eines Fehlers im lokalen Datenmodell (21) die Weiterleitung der Manipulationsanfrage (3) an den Server (1) unterbleibt, wobei das Präsentationsprogramm (22) des Clients (2) und gegebenenfalls eine diesbezügliche Fehlermeldung darstellt.

17. Computernetzwerk nach einem der Ansprüche 13 bis 16, **dadurch gekennzeichnet,**
- **dass** der Server (1) vor der Übermittlung einer Manipulationsanfrage (3) vom Server (1) an alle Clients (2) eine Überprüfung des zentralen Datenmodells (11) durchführt und bei Vorliegen eines Fehlers im zentralen Datenmodell (11) die Weiterleitung der Manipulationsanfrage (3) die Clients (2) unterbleibt,
- **dass** der Server (1) die Ausführung der Manipulationsanfrage (3) im zentralen Datenmodell (11) zurücknimmt, und
- **dass** der Server (1) eine Fehlermeldung (4) an den die Manipulationsanfrage (3) erstellenden Client (2) übermittelt, wobei der Client (2) die Ausführung dieser Manipulationsanfrage (3) im lokalen Datenmodell (21) zurücknimmt und das Präsentationsprogramm (22) dieses Clients (2) gegebenenfalls eine diesbezügliche Fehlermeldung darstellt.

18. Computernetzwerk nach einem der Ansprüche 13 bis 17, **dadurch gekennzeichnet, dass** nicht vom Server (1) behandelte Manipulationsanfragen (3) des ersten Datenmodells (23) verwirft und/oder das Präsentationsprogramm (22) den Konflikt zwischen den Datenmodellen (23, 25) darstellt und dem Benutzer zur Kenntnis bringt.

19. Computernetzwerk nach einem der Ansprüche 13 bis 18, **gekennzeichnet durch**
- einen weiteren Server (13), dessen Eingang an den Ausgang der Verzögerungseinheit (17) angschlossen ist, wobei der weitere Server (13) ausschließlich zum Erhalt von Nachrichten und Manipulationsanfragen (3) konfiguriert ist,
- wobei der Server (1) in vorgegebenen Zeitabständen entweder eine Manipulationsanfrage (3) oder eine Aktivmeldung (14) an den weiteren Server (13) abgibt,
- wobei der weitere Server (13) bei Unterbleiben einer Aktivmeldung (14) oder Manipulationsanfrage (3) des Servers (1) fortan die Funktion des Servers (1) übernimmt.

20. Computer nach Anspruch 19, **gekennzeichnet durch**
- eine Verzögerungseinheit (17) mit einem Speicher (18), die an ihrem Eingang einlangende Nachrichten in ihrem Speicher ablegt und nach einer vorgegebenen Zeit aus diesem ausliest und in ihrem Ausgang abgibt, wobei dem Eingang der Verzögerungseinheit (17) die beim Server (1) einlangenden Nachrichten zugeführt sind,
- wobei der weitere Server (13) bei Unterbleiben einer Aktivmeldung (14) oder Manipulationsanfrage (3) des Servers (1) fortan als Server (1) fungiert und den Speicher (18) der Verzögerungseinheit (17) löscht.

21. Computernetzwerk nach einem der Ansprüche 13 bis 20, **gekennzeichnet durch** einen mit dem Server (1) über das Netzwerk in Datenverbindung stehenden Aufzeichnungsserver (12), der sämtliche von den Clients (2) und/oder vom Server (1) abgehende Manipulationsanfragen (3) abspeichert.

22. Computernetzwerk nach einem der Ansprüche 13 bis 21, **gekennzeichnet durch** eine externe Datenquelle (5), insbesondere mit Flugradardaten, wobei ein weiterer Client (26) vorgesehen ist, der über jeweils ein Datenmodell (21) verfügt, das dem Datenmodell (21) der übrigen Clients (2) entspricht, wobei der weitere Client (26) ein Steuerprogramm (27) aufweist, das bei Einlangen von Daten der externen Datenquelle (5) eine Manipulationsanfrage (3) erstellt und an das lokale Datenmodell (21) weiterleitet,
- wobei der weitere Client (26) die Manipulationsabfrage (3) nach erfolgreicher Manipulation seines lokalen Datenmodells (21) an den Server (1) übermittelt und
- der Server (1) die jeweilige in der Manipulationsanfrage (3) enthaltene Manipulation im zentralen Datenmodell (11) des Servers (1) vornimmt, und
- wobei der Server (1) nach erfolgreicher Durchführung der Manipulation seines zentralen Datenmodells (11) die Manipulationsanfrage (3) an alle Clients (2) und an alle weiteren Clients (26) übermittelt, wobei alle Clients (2) und weiteren Clients (26) ihre lokalen Datenmodelle (21) entsprechend der Manipulationsanfrage (3) ändern.

## Claims

1. Method for the synchronisation of data in a computer network (6), in particular for the synchronisation of traffic information, preferably air traffic information, in a computer network (6) from traffic control centres for traffic monitoring, comprising at least one server (1) and a number of clients (2) in data connection with the server (1),
- wherein on the server (1) a central data model (11) is kept available, which contains the data to be synchronised and which, upon arrival of a manipulation request (3), executes data manipulation corresponding to the manipulation request (3),
- wherein on each of the clients (2) a local data model (21) corresponding to and synchronised with the central data model (11) is kept available,
- wherein on each of the clients (2) there is a presentation program (22) running for presenting the data to be synchronised and for interaction with a user (20), and wherein a control program (24) runs on each of the clients (2) that offers the user (20) the possibility of manipulating the data to be synchronised,
- wherein during data manipulation by the user (20) with the control program (24) running on a client (2) a relevant manipulation request (3) is created and forwarded to the local data model (21) and the respective manipulation contained in the manipulation request (3) is executed in the respective local data model (21) of this client (2),
- wherein the manipulation request (3), after successful execution in the local data model (21) of the client (2), is transmitted to the server (1) and the respective manipulation contained in the manipulation request (3) is executed in the central data model (11) of the server (1), and
- wherein after successful execution of the manipulation of the central data model (11) of the server (1) the manipulation request (3) is transmitted to all clients (2) and the local data models (21) of all clients (2) are changed according to the manipulation request (3), **characterised in that**
- the local data model (21) of a client (2), in particular of all clients (2), each has two similar local data models (23, 25) corresponding to the central data model (11) of the server (1),
- upon corresponding activation of the control program (24) by the user, a manipulation request (3) is created and forwarded to the first local data model (23) and the respective manipulation is executed in the first local data model (23) of the client (2),
- after successful execution of the manipulation in the first local data model (23) of the client (2) the manipulation request (3) is transmitted to the server (1),
- the client (2) after receiving manipulation requests (3) from the server (1) conveys the respective manipulation requests (3) to the second local data model (23),
- the first and the second data model (23, 25) are compared with one another and in case of conflict the first data model (23) is overwritten with the content of the second data model (25), and
- for the transmission of the manipulation requests (3) from the server to a client (2) an asynchronous transmission or broadcast transmission is used.

2. Method according to claim 1, **characterised in that** the transmission of the manipulation requests (3) to all clients (2) is executed in the order of their arrival at the server (1).

3. Method according to any of the preceding claims, **characterised in that** the manipulation requests (3) are assigned consecutive indices (X) according to the order of their arrival, wherein manipulation requests (3) arriving on the server (1) are processed in particular in a single-thread program,
wherein for each of the clients (2), upon receipt of a manipulation request (3) by the server (1) it is checked whether said server has received all manipulation requests (3) issued from a given time, wherein it is checked whether for each index (X) between a predetermined start index (S) and the index (X) of the last received manipulation request (3) each manipulation request (3) with this index (X) is present, and
in the absence of a manipulation request (3) with a specific index (X) a request is delivered to the server (1) for subsequent transmission of the missing manipulation request (3), whereupon the missing manipulation request (3) is transmitted by the server (1) exclusively to the requesting client (2).

4. Method according to any of the preceding claims, **characterised in that** prior to the transmission of a manipulation request (3) from the client (2) to the server (1) in each case a check of the local data model (21) of the client (2) is performed and upon rejection of the manipulation request (3) by the local data model (21) of the client (2), the forwarding of the manipulation request (3) to the server (1) remains undone and, if appropriate, a corresponding error message is displayed in the presentation program (22).

5. Method according to any of the preceding claims, **characterised in that**
- prior to the transmission of a manipulation request (3) from the server (1) to all clients (2) a check of the central data model (11) is performed by the server (1) and upon rejection of the manipulation request (3) by the central data model (11) of the server (1) the forwarding of the manipulation request (3) the clients (2) remains undone,
- the execution of the manipulation request (3) in the central data model (11) is withdrawn, and
- an error message (4) to the client (2) creating the manipulation request (3) is transmitted, wherein the execution of this manipulation request (3) in the local data model (21) of this client (2) is withdrawn and optionally a related error message in the presentation program (22) of this client (2) is displayed.

6. Method according to any of the preceding claims, **characterised in that** manipulation requests (3) of the first data model (23) not processed by the server (1) are discarded and/or the conflict between the data models (23, 25) is represented by the presentation program (22) and brought to the attention of the user.

7. Method according to any of the preceding claims, **characterised in that** the server (1) at predetermined time intervals outputs an active message (14) to further servers (13) and, in case of failure of an active message (14) of the server (1) one of the further servers (13) henceforth takes over the function of the server (1).

8. Method according to claim 7, **characterised in that** manipulation requests (3) arriving at the server (1) are supplied to at least a further server (13) corresponding to or identical to the server (1) with a predetermined time delay, wherein those messages that, due to the time delay have not yet arrived at the further, henceforth active server, are discarded.

9. Method according to any of the preceding claims, **characterised in that** during the running operation another client (2) is added and connected to the server (1) via the computer network (6), wherein the server (1) transmits to the newly added client (2) the entire central data model (11) stored in the server (1) and the client (2) stores this as a local data model (21), wherein, if applicable, the start index (S) of the client (2) is set to the value of the index of the manipulation request (3) last sent from the server (1).

10. Method according to any of the preceding claims, **characterised in that** all manipulation requests (3) originating from the clients (2) and/or from the server (1) are stored in a recording server (12) connected to the server (1) via the computer network (6).

11. Method according to any of the preceding claims, **characterised in that** data, in particular weather data, flight plans, gate information or traffic information, flight radar data, are fed from an external data source (5) into the computer network (6) and supplied to a further client (26) having a data model (21) and a control program (24), wherein, based on the data arriving from the external data source (5), a manipulation request (3) is created and forwarded to the local data model (21),
- wherein the manipulation request (3), after successful execution in the local data model (21) of the further client (26), is transmitted to the server (1) and the respective manipulation contained in the manipulation request (3) is executed in the central data model (11) of the server (1), and
- wherein, after successful execution of the manipulation of the central data model (11) of the server (1), the manipulation request (3) is transmitted to all clients (2) and to all further clients (26) and the local data models (21) of all clients (2) and of all further clients (26) are changed according to the manipulation request (3).

12. Method according to any of the preceding claims, **characterised in that** a synchronous transmission is used for the transmission of any or all of the following types of messages:
a) manipulation requests (3) from a client (2) to the server (1),
b) manipulation requests (3) from the server (1) to a further server (13),
c) transmission of missing manipulation requests (3) from the server (1) to a client (2),
d) transmission of entire models from the server (1) to a client (2),
e) active messages (14) from the server (1) to a further server (13),
and/or that for the transmission of any or all of the following types of messages an asynchronous transmission or a broadcast transmission is used:
f) active messages (14) from the server (1) to a client (2).

13. Computer network for providing and managing synchronised data, in particular air traffic information, comprising
at least one server (1) and
a number of clients (2) in data communication with the server (1),
- wherein the server (1) has a central data model (11) that contains the data to be synchronised and which, upon arrival of a manipulation request (3), executes a data manipulation corresponding to the manipulation request (3),
- wherein each of the clients (2) has a local data model (21) corresponding to and synchronised with the central data model (11),
- wherein on each of the clients (2) there is a presentation program (22) running for presentation and interaction with a user, and wherein a control program (24) runs on each of the clients (2) that offers the user the possibility of manipulating the data,
- wherein of the control program (24) of each client (2), upon activation by the user, creates a relevant manipulation request (3) and forwards it to the local data model (21) and the respective local data model (21) executes the respective manipulation contained in the manipulation request (3),
- wherein the client (2) transmits the manipulation request (3), after successful execution in the local data model (21), to the server (1) and the central data model (11) executes the respective manipulation contained in the manipulation request (3), and
- wherein the server (1), after successful execution of the manipulation of the central data model (11), transmits the manipulation request (3) to all clients (2) and the local data models (21) of all clients (2) execute the manipulation contained in the manipulation request (3), **characterised in that**
- the local data model (21) of a client (2), in particular of all clients (2), each has two similar local data models (23, 25) corresponding to the central data model (11) of the server (1),
- the control program (24) creates a manipulation request (3) upon corresponding activation by the user and forwards it to the first local data model (23) and executes the respective manipulation in the first local data model (23) of the client (2),
- the client (2), after successful execution of the manipulation in the first local data model (23), the manipulation request (3) is transmitted to the server (1),
- the client (2), after receiving the manipulation requests (3) from the server (1), forwards the respective manipulation request (3) to the second local data model (23), and compares the first and the second data model (23, 25) with one another and in the event of a conflict overwrites the content of the first data model (23) with the content of the second data model (25), and
- the server (1) transmits manipulation requests (3) to the client (2) by means of asynchronous transmission or broadcast transmission.

14. Computer network according to claim 13, **characterised in that** the server (1) has a control unit (16) that assigns consecutive indices (X) to the manipulation requests (3) in the order of their arrival at the server (1).

15. Computer network according to claim 13 or 14, **characterised in that** each of the clients (2), upon receipt of a manipulation request (3) checks whether said client has received all manipulation requests (3) issued from a given time, in particular whether for each index (X) there is a manipulation request (3) with this index (X) between a given start index and the index (X) of the last received manipulation request (3), and wherein the client (2) in the absence of a manipulation request (3) with a specific index (X) transmits a request to the server (1) for subsequent transmission of the missing manipulation request (3), whereupon the server (1) transmits the missing manipulation request (3) exclusively to the requesting client (2).

16. Computer network according to any of claims 13 to 15, **characterised in that** the client (2), before the transmission of a manipulation request (3) to the server (1), in each case checks its local data model (21) and if an error is present in the local data model (21) the forwarding of the manipulation request (3) to the server (1) remains undone, wherein the presentation program (22) of the client (2) optionally displays an error message relating thereto.

17. Computer network according to any of claims 13 to 16, **characterised in that**
- the server (1), before transmitting a manipulation request (3) from the server (1) to all clients (2), checks the central data model (11) and if an error is present in the central data model (11) the forwarding of the manipulation request (3) the clients (2) remains undone,
- the server (1) withdraws the execution of the manipulation request (3) in the central data model (11), and
- the server (1) transmits an error message (4) to the client (2) creating the manipulation request (3), wherein the client (2) withdraws the execution of this manipulation request (3) in the local data model (21) and the presentation program (22) of this client (2) optionally displays an error message relating thereto.

18. Computer network according to any of claims 13 to 17, **characterised in that** manipulation requests (3) of the first data model (23) not processed by the server (1) are discarded and/or the presentation program (22) displays the conflict between the data models (23, 25) and informs the user.

19. Computer network according to any of claims 13 to 18, **characterised by**
- a further server (13) whose input is connected to the output of the delay unit (17), wherein the further server (13) is configured exclusively for receipt of messages and manipulation requests (3),
- wherein the server (1) at predetermined intervals either issues a manipulation request (3) or an active message (14) to the further server (13),
- wherein the further server (13), in case of failure of an active message (14) or manipulation request (3) of the server (1), henceforth takes over the function of the server (1).

20. Computer according to claim 19, **characterised by**
- a delay unit (17) having a memory (18) that stores messages arriving at its input in its memory and reads them out after a predetermined time and outputs them in its output, wherein the messages arriving at the server (1) are supplied to the input of the delay unit (17),
- wherein the further server (13), in case of failure of an active message (14) or manipulation request (3) of the server (1), henceforth acts as a server (1) and deletes the memory (18) of the delay unit (17).

21. Computer network according to any of claims 13 to 20, **characterised by** a recording server (12) that is in data communication with the server (1) via the network and that stores all manipulation requests (3) originating from the clients (2) and/or from the server (1).

22. Computer network according to any of claims 13 to 21, **characterised by** an external data source (5), in particular with flight radar data, wherein a further client (26) is provided, which in each case has a data model (21) that corresponds to the data model (21) of the remaining clients (2), wherein the further client (26) has a control program (27) which creates a manipulation request (3) on arrival of data from the external data source (5) and forwards said manipulation request to the local data model (21),
- wherein the further client (26) transmits the manipulation request (3) to the server (1) after successful manipulation of its local data model (21) and
- the server (1) stores the respective manipulation contained in the manipulation request (3) in the central data model (11) of the server (1), and
- wherein the server (1), after successful execution of the manipulation of its central data model (11), transmits the manipulation request (3) to all clients (2) and to all further clients (26), wherein all clients (2) and further clients (26) modify their local data models (21) according to the manipulation request (3).

## Revendications

1. Procédé de synchronisation de données dans un réseau informatique (6), en particulier de synchronisation d'informations de trafic, de préférence d'informations de trafic aérien, dans un réseau informatique (6) de postes de contrôle pour la surveillance du trafic, avec au moins un serveur (1) et un nombre de clients (2) en liaison de données avec le serveur (1),
- dans lequel sur le serveur (1) est maintenu à disposition un modèle de données central (11) qui contient les données à synchroniser et qui réalise, lors de l'arrivée d'une demande de manipulation (3), une manipulation de données correspondant à la demande de manipulation (3),
- dans lequel sur chacun des clients (2) est maintenu à disposition respectivement un modèle de données local (21) correspondant au modèle de données central (11) et synchronisé avec ce dernier,
- dans lequel sur chacun des clients (2) se déroule respectivement un programme de présentation (22) pour la présentation des données à synchroniser et pour l'interaction avec un utilisateur (20), et dans lequel sur les clients (2) se déroule respectivement un programme de commande (24) qui offre à l'utilisateur (20) la possibilité de manipuler les données à synchroniser,
- dans lequel, lors de l'exécution d'une manipulation de données par l'utilisateur (20) avec le programme de commande (24) se déroulant sur un client (2), une demande de manipulation (3) à ce sujet est créée et est transférée au modèle de données local (21) et la manipulation respective contenue dans la demande de manipulation (3) est réalisée dans le modèle de données local (21) respectif de ce client (2),
- dans lequel, après une exécution réussie dans le modèle de données local (21) du client (2), la demande de manipulation (3) est communiquée au serveur (1) et la manipulation respective contenue dans la demande de manipulation (3) est réalisée dans le modèle de données central (11) du serveur (1), et
- dans lequel, après une exécution réussie de la manipulation du modèle de données central (11) du serveur (1), la demande de manipulation (3) est communiquée à tous les clients (2) et les modèles de données locaux (21) de tous les clients (2) sont modifiés en fonction de la demande de manipulation (3), **caractérisé en ce que**
- le modèle de données local (21) d'un client (2), en particulier de tous les clients (2), comprend respectivement deux modèles de données locaux (23, 25) de même type, correspondant au modèle de données central (11) du serveur (1),
- en cas de commande correspondante du programme de commande (24) par l'utilisateur, une demande de manipulation (3) est créée et transférée au premier modèle de données local (23) et la manipulation respective est réalisée dans le premier modèle de données local (23) du client (2),
- après une exécution réussie de la manipulation dans le premier modèle de données local (23) du client (2), la demande de manipulation (3) est communiquée au serveur (1),
- le client (2), après réception de demandes de manipulation (3) du serveur (1), les demandes de manipulation (3) respectives sont transférées au second modèle de données local (23),
- le premier et le second modèle de données (23, 25) sont comparés l'un à l'autre et, dans le cas d'un conflit, le premier modèle de données (23) est écrasé avec le contenu du second modèle de données (25), et,
- pour la communication des demandes de manipulation (3) du serveur à un client (2), une transmission asynchrone ou une transmission de diffusion est employée.

2. Procédé selon la revendication 1, **caractérisé en ce que** la communication des demandes de manipulation (3) à tous les clients (2) est réalisée dans la séquence de leur arrivée au serveur (1).

3. Procédé selon l'une quelconque des revendications précédentes, **caractérisé en ce que** des indices consécutifs (X) sont attribués aux demandes de manipulation (3) selon la séquence de leur arrivée, dans lequel des demandes de manipulation (3) arrivant sur le serveur (1) sont traitées en particulier dans un programme à fil unique,
dans lequel, pour chacun des clients (2) lors de la réception d'une demande de manipulation (3) du serveur (1), il est vérifié si toutes les demandes de manipulation (3) émises à partir d'un moment prédéfini lui sont parvenues, dans lequel il est vérifié si, pour chaque indice (X) entre un indice de début prédéfini (S) et l'indice (X) de la dernière demande de manipulation (3) reçue, il y a respectivement une demande de manipulation (3) avec cet indice (X), et,
en l'absence d'une demande de manipulation (3) avec un certain indice (X), une requête au serveur (1) pour la communication ultérieure de la demande de manipulation (3) manquante est émise, moyennant quoi la demande de manipulation (3) manquante est communiquée par le serveur (1) exclusivement au client (2) demandeur.

4. Procédé selon l'une quelconque des revendications précédentes, **caractérisé en ce que**, avant la communication d'une demande de manipulation (3) par le client (2) au serveur (1), une vérification du modèle de données local respectif (21) du client (2) est exécutée et, en cas de rejet de la demande de manipulation (3) par le modèle de données local (21) du client (2), le transfert de la demande de manipulation (3) au serveur (1) ne peut avoir lieu et, le cas échéant, un message d'erreur à ce sujet est présenté dans le programme de présentation (22).

5. Procédé selon l'une quelconque des revendications précédentes, **caractérisé en ce que**,
- avant la communication d'une demande de manipulation (3) par le serveur (1) à tous les clients (2), une vérification du modèle de données central (11) du serveur (1) est exécutée et, en cas de rejet de la demande de manipulation (3) par le modèle de données central (11) du serveur (1), le transfert de la demande de manipulation (3) les clients (2) n'a pas lieu,
- l'exécution de la demande de manipulation (3) est annulée dans le modèle de données central (11), et
- un message d'erreur (4) est communiqué au client (2) créant la demande de manipulation (3), dans lequel l'exécution de cette demande de manipulation (3) est annulée dans le modèle de données local (21) de ce client (2) et, le cas échéant, un message d'erreur à ce sujet est présenté dans le programme de présentation (22) de ce client (2).

6. Procédé selon l'une quelconque des revendications précédentes, **caractérisé en ce que** des demandes de manipulation (3) du premier modèle de données (23), non traitées par le serveur (1), sont rejetées et/ou le conflit entre les modèles de données (23, 25) est présenté par le programme de présentation (22) et porté à la connaissance de l'utilisateur.

7. Procédé selon l'une quelconque des revendications précédentes, **caractérisé en ce que** le serveur (1) émet à intervalles de temps prédéfinis un message d'activité (14) à d'autres serveurs (13) et dans lequel, en cas de non-survenance d'un message d'activité (14) du serveur (1), un des autres serveurs (13) assume dès lors la fonction du serveur (1).

8. Procédé selon la revendication 7, **caractérisé en ce que** des demandes de manipulation (3) arrivant au serveur (1) sont amenées à au moins un autre serveur (13) correspondant ou identique au serveur (1) avec un retard temporel prédéfini, dans lequel les messages, qui ne sont pas encore arrivés en raison du retard temporel dans l'autre serveur à présent actif, sont rejetés.

9. Procédé selon l'une quelconque des revendications précédentes, **caractérisé en ce qu'**un autre client (2) est ajouté au cours du fonctionnement en cours et est relié au serveur (1) par le biais du réseau informatique (6), dans lequel le serveur (1) communique au client (2) nouvellement ajouté le modèle de données central (11) complet mémorisé dans le serveur (1) et le client (2) le mémorise en tant que modèle de données local (21), dans lequel, le cas échéant, l'indice de début (S) du client (2) est mis à la valeur de l'indice de la demande de manipulation (3) envoyée en dernier par le serveur (1).

10. Procédé selon l'une quelconque des revendications précédentes, **caractérisé en ce que** toutes les demandes de manipulation (3) provenant des clients (2) et/ou du serveur (1) sont mémorisées dans un serveur d'enregistrement (12) relié au serveur (1) par le biais du réseau informatique (6).

11. Procédé selon l'une quelconque des revendications précédentes, **caractérisé en ce que** des données, en particulier des données météorologiques, des plans de vol, des informations de portes d'embarquement, des informations de trafic ou des données de radar de vol sont introduites dans le réseau informatique (6) par une source de données externe (5) et sont amenées à un autre client (26), qui dispose d'un modèle de données (21) ainsi que d'un programme de commande (24), dans lequel une demande de manipulation (3) est créée sur la base des données arrivant de la source de données externe (5) et transférée au modèle de données local (21),
- dans lequel la demande de manipulation (3), après une exécution réussie dans le modèle de données local (21) de l'autre client (26), est communiquée au serveur (1) et la manipulation respective contenue dans la demande de manipulation (3) est réalisée dans le modèle de données central (11) du serveur (1), et
- dans lequel, après une exécution réussie de la manipulation du modèle de données central (11) du serveur (1), la demande de manipulation (3) est communiquée à tous les clients (2) et à tous les autres clients (26) et les modèles de données locaux (21) de tous les clients (2) et de tous les autres clients (26) sont modifiés en fonction de la demande de manipulation (3).

12. Procédé selon l'une quelconque des revendications précédentes, **caractérisé en ce que**, pour la communication de messages individuels ou de messages de tous les types suivants, une transmission synchrone est employée :
a) demandes de manipulation (3) d'un client (2) au serveur (1),
b) demandes de manipulation (3) du serveur (1) à un autre serveur (13),
c) communication de demandes de manipulation (3) manquantes du serveur (1) à un client (2),
d) communication de tous les modèles du serveur (1) à un client (2),
e) messages d'activité (14) du serveur (1) à un autre serveur (13),
et/ou que, pour la communication de messages individuels ou de messages de tous les types suivants, une transmission asynchrone ou une communication de diffusion est employée :
f) messages d'activité (14) du serveur (1) à un client (2).

13. Réseau informatique pour la préparation et la gestion de données synchronisées, en particulier d'informations de trafic aérien, comportant
au moins un serveur (1) et
un nombre de clients (2) en liaison de données avec le serveur (1),
- dans lequel le serveur (1) comprend un modèle de données (11) qui contient les données à synchroniser et qui réalise, lors de l'arrivée d'une demande de manipulation (3), une manipulation de données correspondant à la demande de manipulation (3),
- dans lequel chacun des clients (2) comprend respectivement un modèle de données local (21) correspondant au modèle de données central (11) et synchronisé avec ce dernier,
- dans lequel sur chacun des clients (2) se déroule respectivement un programme de présentation (22) pour la présentation et l'interaction avec un utilisateur, et dans lequel sur les clients (2) se déroule respectivement un programme de commande (24) qui offre à l'utilisateur la possibilité de manipuler les données,
- dans lequel d'un actionnement par l'utilisateur du programme de commande (24) d'un client (2), une demande de manipulation (3) à ce sujet est créée et transférée au modèle de données local (21) et le modèle de données local (21) respectif réalise la manipulation respective contenue dans la demande de manipulation (3),
- dans lequel, après une exécution réussie dans le modèle de données local (21), le client (2) communique la demande de manipulation (3) au serveur (1) et le modèle de données central (11) réalise la manipulation respective contenue dans la demande de manipulation (3), et
- dans lequel, après une exécution réussie de la manipulation du modèle de données central (11), le serveur (1) communique la demande de manipulation (3) à tous les clients (2) et les modèles de données locaux (21) de tous les clients (2) réalisent la manipulation contenue dans la demande de manipulation (3), **caractérisé en ce que**
- le modèle de données local (21) d'un client (2), en particulier de tous les clients (2), comprend respectivement deux modèles de données locaux (23, 25) de même type, correspondant au modèle de données central (11) du serveur (1),
- en cas de commande correspondante par l'utilisateur, le programme de commande (24) crée une demande de manipulation (3) et la transfère au premier modèle de données local (23) et réalise la manipulation respective dans le premier modèle de données local (23) du client (2),
- le client (2), après une exécution réussie de la manipulation dans le premier modèle de données local (23), est communiquée la demande de manipulation (3) au serveur (1),
- le client (2), après la réception de demandes de manipulation (3) du serveur (1), transfère la demande de manipulation (3) respective au second modèle de données local (23), et compare le premier et le second modèle de données (23, 25) l'un à l'autre et, dans le cas d'un conflit, écrase le contenu du premier modèle de données (23) avec le contenu du second modèle de données (25), et
- le serveur (1) transfère au client (2) des demandes de manipulation (3) au moyen d'une transmission asynchrone ou d'une transmission de diffusion.

14. Réseau informatique selon la revendication 13, **caractérisé en ce que** le serveur (1) comprend une unité de commande (16) qui attribue des indices consécutifs (X) aux demandes de manipulation (3) dans la séquence de leur arrivée au serveur (1).

15. Réseau informatique selon la revendication 13 ou 14, **caractérisé en ce que** chacun des clients (2) lors de la réception d'une demande de manipulation (3), vérifie si toutes les demandes de manipulation (3) émises à partir d'un moment prédéfini lui sont parvenues, en particulier si, pour chaque indice (X) entre un indice de début prédéfini et l'indice (X) de la dernière demande de manipulation (3) obtenue, il y a une demande de manipulation (3) respective avec cet indice (X), et dans lequel le client (2), en cas d'absence de demande de manipulation (3) avec un certain indice (X), communique une requête au serveur (1) pour la communication ultérieure de la demande de manipulation (3) manquante, moyennant quoi le serveur (1) communique la demande de manipulation (3) manquante exclusivement au client (2) demandeur.

16. Réseau informatique selon l'une quelconque des revendications 13 à 15, **caractérisé en ce que** le client (2), avant la communication d'une demande de manipulation (3) au serveur (1), exécute respectivement une vérification de son modèle de données local (21) et, en cas de présence d'une erreur dans le modèle de données local (21), le transfert de la demande de manipulation (3) au serveur (1) n'a pas lieu, dans lequel le programme de présentation (22) du client (2) présente, le cas échéant, un message d'erreur à ce sujet.

17. Réseau informatique selon l'une quelconque des revendications 13 à 16, **caractérisé en ce que**
- le serveur (1), avant la communication d'une demande de manipulation (3) du serveur (1) à tous les clients (2), exécute une vérification du modèle de données central (11) et, en cas de présence d'une erreur dans le modèle de données central (11), le transfert de la demande de manipulation (3) les clients (2) n'a pas lieu,
- le serveur (1) annule l'exécution de la demande de manipulation (3) dans le modèle de données central (11), et
- le serveur (1) communique un message d'erreur (4) au client (2) créant la demande de manipulation (3), dans lequel le client (2) annule l'exécution de cette demande de manipulation (3) dans le modèle de données local (21) et le programme de présentation (22) de ce client (2) présente le cas échéant un message d'erreur à ce sujet.

18. Réseau informatique selon l'une quelconque des revendications 13 à 17, **caractérisé en ce que** des demandes de manipulation (3) du premier modèle de données (23) non traitées par le serveur (1) sont rejetées et/ou le programme de présentation (22) présente le conflit entre les modèles de données (23, 25) et le porte à disposition de l'utilisateur.

19. Réseau informatique selon l'une quelconque des revendications 13 à 18, **caractérisé par**
- un autre serveur (13) dont l'entrée est branchée à la sortie de l'unité de retard (17), dans lequel l'autre serveur (13) est configuré exclusivement pour la réception de messages et de demandes de manipulation (3),
- dans lequel le serveur (1) émet à intervalles de temps prédéfinis soit une demande de manipulation (3), soit un message d'activité (14) à l'autre serveur (13),
- dans lequel l'autre serveur (13), en cas de non-survenance d'un message d'activité (14) ou d'une demande de manipulation (3) du serveur (1) assume à présent la fonction du serveur (1).

20. Ordinateur selon la revendication 19, **caractérisé par**
- une unité de retard (17) avec une mémoire (18), qui dépose dans sa mémoire des messages arrivant à son entrée et après un temps prédéfini les lit dans sa mémoire et les émet à sa sortie, dans lequel les messages arrivant au serveur (1) sont amenés à l'entrée de l'unité de retard (17),
- dans lequel l'autre serveur (13), en cas de non-survenance d'un message d'activité (14) ou d'une demande de manipulation (3) du serveur (1), fait office à présent de serveur (1) et efface la mémoire (18) de l'unité de retard (17).

21. Réseau informatique selon l'une quelconque des revendications 13 à 20, **caractérisé par** un serveur d'enregistrement (12) en liaison de données avec le serveur (1) par le biais du réseau, qui stocke toutes les demandes de manipulation (3) arrivant des clients (2) et/ou du serveur (1).

22. Réseau informatique selon l'une quelconque des revendications 13 à 21, **caractérisé par** une source de données externe (5), en particulier avec des données de radar de vol, dans lequel est prévu un autre client (26) qui dispose d'un modèle de données respectif (21) qui correspond au modèle de données (21) des autres clients (2), dans lequel l'autre client (26) comprend un programme de commande (27) qui, lors de l'arrivée de données de la source de données externe (5), crée une demande de manipulation (3) et la transfère au modèle de données local (21),
- dans lequel l'autre client (26) communique la demande de manipulation (3) après une manipulation réussie de son modèle de données local (21) au serveur (1) et
- le serveur (1) réalise la manipulation respective contenue dans la demande de manipulation (3) dans le modèle de données central (11) du serveur (1), et
- dans lequel le serveur (1), après une exécution réussie de la manipulation de son modèle de données central (11), communique la demande de manipulation (3) à tous les clients (2) et à tous les autres clients (26), dans lequel tous les clients (2) et tous les autres clients (26) modifient leurs modèles de données locaux (21) en fonction de la demande de manipulation (3).
